# EUROPÄISCHE PATENTSCHRIFT

(11) **EP 3 230 646 B1**
(45) Veröffentlichungstag und Bekanntmachung des Hinweises auf die Patenterteilung: **09.05.2018**
(21) Anmeldenummer: 14821542.9
(22) Anmeldetag: 12.12.2014
(51) Int. Cl.: F16L 37/113, F16L 37/36

(54) **TROCKENKUPPLUNGS-AUFNAHMETEIL EINER FLUID-TROCKENKUPPLUNG SOWIE DAMIT EINGERICHTETE FLUID-TROCKENKUPPLUNG**
DRY-COUPLING RECEIVING PART OF A DRY COUPLING FOR FLUID AND DRY COUPLING FOR FLUID ESTABLISHED THEREWITH
PIÈCE DE LOGEMENT D'UN EMBRAYAGE À SEC D'UN EMBRAYAGE À SEC POUR LIQUIDES AINSI QU'EMBRAYAGE À SEC POUR LIQUIDES ÉQUIPÉ CE CELLE-CI

(43) Veröffentlichungstag der Anmeldung: 18.10.2017
(73) Patentinhaber: Roman Seliger GmbH, 22848 Norderstedt (DE)
(72) Erfinder: HAMKENS, Hauke Peter, 25870 Oldenswort (DE); SYLLA, Jan-Oliver, 25832 Tönning (DE)
(74) Vertreter: Stork Bamberger Patentanwälte PartmbB
(86) Internationale Anmeldenummer: PCT/EP2014/077579
(87) Internationale Veröffentlichungsnummer: WO 2016/091326

(56) Entgegenhaltungen:
- EP-A1- 2 348 242
- DE-A1-102012 209 629
- DE-C- 858 617
- GB-A- 670 666
- US-A- 5 975 491

## Beschreibung

Die Erfindung betrifft ein Trockenkupplungs-Aufnahmeteil einer Fluid-Trockenkupplung umfassend (i) ein sich entlang einer zentralen Aufnahmeteilachse axial erstreckendes rohrförmiges Aufnahmeteilgehäuse mit einem ersten kuppelseitigen Gehäuseende zum Kuppeln mit einem Trockenkupplungs-Steckteil der Trockenkupplung sowie mit einem zweiten leitungsseitigen Gehäuseende zur Verbindung mit einem Leitungselement; (ii) eine in dem Aufnahmeteilgehäuse angeordnete Ventileinrichtung, gebildet durch einen Führungs-Sitzring mit einer Sitzring-Innenwand sowie durch einen den Führungs-Sitzring mit einem Teil durchfassenden, an dem Führungs-Sitzring mittels eines Führungs-Radiallagers radial gelagerten und axial gleitbewegbaren Ventilkörper, wobei das Aufnahmeteilgehäuse und der Führungs-Sitzring zum Kuppeln mit dem Trockenkupplungs-Steckteil in Eingriff bringbare Anschlusselemente aufweisen, die zum Herstellen einer drehfesten Verbindung zwischen dem Führungs-Sitzring und dem Trockenkupplungs-Steckteil sowie zum Herstellen einer Drehverbindung zwischen dem Aufnahmeteilgehäuse und dem Trockenkupplungs-Steckteil eingerichtet sind, wobei der Ventilkörper einen Ventilkopf, einen außerhalb des Führungs-Sitzrings liegenden Ventilfuß sowie einen mittels des Führungs-Radiallagers an der Sitzring-Innenwand gelagerten Ventilstegteil aufweist, der den Ventilkopf und den Ventilfuß miteinander verbindet und axial beabstandet, wobei der Führungs-Sitzring an einem ersten Sitzringende einen Ventilsitz aufweist, der zusammen mit dem Ventilkopf ein Aufnahmeteil-Ventil bildet, wobei der Ventilkopf in Ventil-Schließposition dichtend in den Ventilsitz einfasst und in Ventil-Öffnungsposition an dem ersten Sitzringende aus dem Führungs-Sitzring hervortritt; (iii) eine Aufnahmeteil-Steuereinrichtung, mittels der der Ventilkörper in die Ventil-Öffnungsposition sowie umgekehrt in die Ventil-Schließposition bewegbar ist, umfassend eine um die Aufnahmeteilachse drehbare Steuerhülse mit einer Führungskulisse sowie Steuerelemente, die an dem Ventilfuß angeordnet sind und die in die Führungskulisse einfassen, wobei zentrale Körperachsen des Ventilkörpers, der Steuerhülse und des Führungs-Sitzrings koaxial mit der Aufnahmeteilachse sind, der Führungs-Sitzring und die Steuerhülse einen den Ventilkörper mit Fluidströmung beaufschlagenden Fluid-Durchgangsraum bilden und der axial bewegbar gelagerte Ventilkörper durch richtungsabhängige Drehung der Steuerhülse und entsprechende Axialverlagerung in die Ventil-Schließposition bzw. die Ventil-Öffnungsposition setzbar ist und das Aufnahmeteilgehäuse und die Steuerhülse separate, drehfest miteinander verbundene Bauteile sind. Die Steuerhülse ist ein separates Steuerteil, das frei von Kupplungsanschlusselementen ist.

Eine Trockenkupplung setzt sich aus zwei Kupplungshälften zusammen, nämlich aus dem Aufnahmeteil oder Mutterteil sowie aus einem zugehörigen Steckteil oder Vaterteil. Zum Beispiel ist das Aufnahmeteil mit einer Treibstoff-Schlauchleitung verbunden, während das Steckteil einen Anschluss an einem Tank bildet. Eine gattungsgemäße Trockenkupplung weist eine typische Bauart und Funktion auf. Jede Kupplungshälfte umfasst ein Ventil mit einem Ventilkörper, der zum Öffnen und Schließen des zugehörigen Ventils axial verlagerbar ist. Im gekuppelten Zustand der beiden Kupplungshälften befinden sich die beiden Ventilkörper in einem Ventilverbund, der sich durch Drehbewegung eines mit einer Führungskulisse ausgestatteten Gehäuse-Steuerteils des Aufnahmeteils zum Öffnen und Schließen der Ventile axial verlagern lässt. Wenigstens der Ventilkörper des Steckteils wird mit Rückstellkraft beaufschlagt. Insbesondere weisen die Trockenkupplung und deren Bauteile gemäß einem NATO-Standardisierungseinkommen (STANAG) standardisierte Merkmale auf.

Aus DE 858 617 ist ein gattungsgemäßes Trockenkupplungs-Aufnahmeteil bekannt. Eine Steuerhülse ist in einem Aufnahmeteilgehäuse mittels einer rückwärtigen Schraubverbindung befestigt, die besonders zu montieren ist. Infolge der bei der gattungsgemäßen Bauart im Betrieb auftretenden erheblichen Druckbeanspruchung muss die rückwärtige Schraubverbindung besonders stark dimensioniert werden. Dies führt zu einer relativ klobigen Bauform der Kupplungshälfte, wobei die Drucksicherheit dennoch beeinträchtigt ist. Zudem bleiben das Montieren und Demontieren einer Ventileinrichtung des bekannten Aufnahmeteils infolge der zu handhabenden Verbindungsteile und Bauteile unbefriedigend. Es sind weiterhin Aufnahmeteilgehäuse gattungsgemäßer Kupplungen bekannt, die zum Herstellen einer drehfesten Verbindung einer Steuerhülse mit einem Aufnahmeteilgehäuse statt einer Schraubverbindung eine Pressverbindung oder eine Schweißverbindung zwischen den Teilen vorsehen. Auch solche Verbindungen erfordern die Verwendung von besonderem Werkzeug. Zum Herstellen der Verbindung müssen die Teile für den einzurichtenden Drehversatz besonders ausgerichtet werden. Bei der Fertigung können Herstellungsschäden auftreten, die besonders zu vermeiden oder zusätzlich zu beseitigen sind. Im Ganzen ist eine beträchtliche Fertigungszeit unter Verwendung von Sonderwerkzeug erforderlich. Mit einer Press- oder Schweißverbindung bleibt die Drucksicherheit eingeschränkt. Die montierten Teile lassen sich nicht oder nicht ohne weiteres, gegebenenfalls nur durch Zerstörung, voneinander trennen.

Aus DE 10 2012 209 629 A1 ist ein Trockenkupplungs-Aufnahmeteil mit einer Steuerhülse bekannt, die ein kuppelseitige Anschlusselemente aufweisendes erstes Aufnahmeteilgehäuses bildet. Die Steuerhülse ist im Bereich eines Fluid-Durchgangsraums von einem zweiten Aufnahmeteilgehäuse umgeben, das an der Steuerhülse um diese drehbar gelagert ist und ein leitungsseitiges Anschlussteil bildet. Fertigung und Bauform des Aufnahmeteils bleiben unbefriedigend. In einem Abschnitt des ersten Aufnahmeteilgehäuses sind Steuerkurven durch Fräsen oder Gießen einzuarbeiten, und dieser Abschnitt muss zum hydraulischen Abdichten von dem zweiten druckbelastbaren Gehäuseteil umgeben werden.

Aus der US 5975491 A ist ein gattungsgemäßes Trockenkupplungs-Aufnahmeteil einer Fluid-Trockenkupplung mit einer Steuerhülse bekannt. Der Erfindung liegen die Ziele zugrunde, den Aufwand für Montage und Demontage des Trockenkupplungs-Aufnahmeteils mit präzise ausrichtbaren und in bestimmten Positionen festlegbaren Elementen erheblich zu reduzieren, wobei - damit einhergehend - die Bauform und -größe verhältnismäßig klein bleiben und dennoch die Drucksicherheit erhöht sein sollen.

Die Ziele werden in Verbindung mit den eingangs genannten Merkmalen dadurch erreicht, dass zwischen dem Aufnahmeteilgehäuse und der Steuerhülse eine lösbare, lose Steck-Formschlussverbindung ausgebildet ist, die die drehfeste Verbindung ausbildet und die Steuerhülse an dem Aufnahmeteilgehäuse gegen axiale Bewegung zum kuppelseitigen Gehäuseende hin festlegt, wobei die Steck-Formschlussverbindung wenigstens ein erstes Steckelementpaar aufweist, das das Aufnahmeteilgehäuse und die Steuerhülse formschlüssig in einer durch den Formschluss fixierten Versatzwinkelposition miteinander verbindet, in der zum Kuppeln und Entkuppeln sowohl eine zu der Ventil-Schließposition gehörende Steuerelement-Anfangsposition von jedem Steuerelement in der Führungskulisse als auch zugehörige Kuppel-Anschlusspositionen der genannten Anschlusselemente bestimmt sind, und wobei die Steck-Formschlussverbindung wenigstens ein zweites Steckelementpaar aufweist, das die festgelegte Axialposition bestimmt.

Das erfindungsgemäße Trockenkupplungs-Aufnahmeteil bestimmt auch eine erfindungsgemäße Fluid-Trockenkupplung, die aus dem Trockenkupplungs-Aufnahmeteil und einem damit verbundenen Trockenkupplungs-Steckteil gebildet ist, wobei das Trockenkupplungs-Steckteil ein Steckteil-Ventil mit einem Steckteil-Ventilkörper aufweist, der zusammen mit dem Aufnahmeteil-Ventilkörper einen axial verlagerbaren Schiebeverbund bildet, der gegen Rückstellkraft aus zugehörigen Ventil-Schließpositionen in Ventil-Öffnungspositionen setzbar ist.

Die Angabe "axial" wird jeweils im Zusammenhang als parallel zu oder in Richtung der zentralen Achse des Aufnahmeteilgehäuses (Aufnahmeteilachse) oder einer mit der Aufnahmeteilachse koaxialen Achse verstanden. Die Angabe "axial" bezieht sich insbesondere auf Teile oder Flächen, die sich in Axialrichtung erstrecken und in denen die Aufnahmeteilachse bzw. eine damit koaxiale Achse liegt. Die Angabe "radial" betrifft Richtungen, die von einer zugehörigen Achse ausgehen und senkrecht zu dieser Achse gerichtet sind, oder sie bezieht sich auf Teile oder Flächen, die sich in Bezug auf eine zentrale Achse dazu senkrecht und radial erstrecken.

Erfindungsgemäß erreicht man in Kombination eine definierte Axialverbindung und eine definierte drehfeste Verbindung, wobei die Steckelementpaare Formschluss-Passungen mit Schlüsselflächen bilden, die die Teile in loser, aber enger positionsdefinierter Lage aneinanderfügen. Spiel zwischen den Teilen ist auf das geringste Maß reduziert. Die Teile, nämlich das Aufnahmeteilgehäuse und die Steuerhülse lassen sich einfach nur durch Stecken in Axialrichtung aneinanderfügen. Die Form-Steckverbindung ist vorteilhaft so eingerichtet, dass die Steuerhülse am leitungsseitigen (rückwärtigen) Ende des Aufnahmeteilgehäuses in dieses einsetzbar ist. Dem oder den zweiten Steckelementpaaren kommt wesentliche Bedeutung hinsichtlich der axialen Festlegung zu, die die Steuerhülse gegen Bewegung in Richtung zur Kupplungsseite des Aufnahmeteilgehäuses sperrt. Jedes zweite Steckelementpaar weist radial gerichtete Anschlagflächen auf, die im Betriebszustand des Kupplungs-Aufnahmeteils in besonders großem Maß mit Druckkraft in Richtung der Kupplungsseite beaufschlagbar sind. Es resultiert besonders hohe Drucksicherheit. Das oder die ersten Steckelementpaare legen die relative Dreh- oder Winkelposition (Versatzwinkelposition) und damit den Dreh- oder Umfangsversatz zwischen dem Aufnahmeteilgehäuse und der Steuerhülse präzise fest. Der Drehversatz ist zur definierten Winkelposition und Ausrichtung einerseits wenigstens eines Anschluss- oder Kupplungsteils des Aufnahmeteilgehäuses und andererseits wenigstens eines Teils an dem Führungs-Sitzring eingerichtet. Das heißt, dass die Dreh/Winkelpositionen dieser Teile durch den festgelegten Drehversatz bestimmt werden. Die Positionen werden in Verbindung mit der Anordnung und Gestaltung der Führungskulisse der Steuerhülse bestimmt und festgelegt. Die erfindungsgemäße Steck-Formschlussverbindung kann insbesondere an dem leitungsseitigen Ende der Steuerhülse auf besonders einfache Weise mit einem Sicherungselement wie vorteilhaft einem Sicherungsring gesichert werden. Eine derart einfache Sicherungsmaßnahme reicht in Kombination mit der Steck-Formschlussverbindung aus. Jedes Sicherungselement ist einsetzbar, das frei von einer Kraftschlussverbindung einen Axialversatz der Steuerungshülse zum leitungsseitigen Ende des Aufnahmeteilgehäuses hin sperrt. Mit der erfindungsgemäßen Steck-Formschlussverbindung erreicht man große Drucksicherheit mit relativ kleinbauenden Teilen, deren Dimensionierung optimal reduziert ist. In Verbindung mit den übrigen Merkmalen ist es wesentlich, dass die Steuerhülse nur als Steuerteil gestaltet ist, das als solches kein Druckgehäuse und auch nicht den Teil eines Druckgehäuses bildet. Die Steuerhülse bleibt frei von Anschluss-, Verbindungs- und/oder Kupplungsteilen, die wesentliche Bestandteile des Aufnahmeteilgehäuses sind, das als solches das Druckgehäuse der Kupplungshälfte bildet. Ein zusätzliches Außengehäuse entfällt. Im Ganzen erreicht man mit der erfindungsgemäßen Steck-Formschlussverbindung eine erhebliche Verbesserung zur präzisen Montage/Demontage, indem Fertigungszeit und Werkzeugeinsatz wesentlich reduziert werden, wobei die Bauform und -größe der Kupplungshälfte bei dennoch großer Drucksicherheit verhältnismäßig klein bleiben.

Eine bevorzugte, besonders vorteilhafte Ausgestaltung besteht darin, dass die Führungskulisse an ihrer dem ersten Gehäuseende des Aufnahmeteilgehäuses zugewandten Seite zum Einsetzen und Entnehmen der an dem Ventilfuß angeordneten Steuerelemente axial offen ist. In Kombination mit der erfindungsgemäßen Steck-Formschlussverbindung erreicht man, dass die Steuerhülse von dem rückwärtigen Ende des Aufnahmeteilgehäuses her in dieses einsetzbar ist und die Ventileinrichtung einschließlich der an diese angesetzten Steuerelemente am vorderseitigen Ende des Aufnahmeteilgehäuses in dieses hineinsetzbar ist. Ein zusätzliches Außengehäuse entfällt. Montage und Demontage des Trockenkupplungs-Aufnahmeteils sind in besonderem Maß vereinfacht. Insbesondere kann die Ventileinrichtung, die vorzugsweise als modulare Baueinheit gestaltet ist, für Wartungszwecke in kürzester Zeit dem Aufnahmeteilgehäuse (Druckgehäuse) entnommen und dort wieder eingesetzt oder ausgetauscht werden.

Eine Gestaltung besteht darin, dass die Anschlusselemente des Kupplungs-Aufnahmeteils in ihren Kuppel-Anschlusspositionen Anschlusspaare bilden, wobei jedes Anschlusspaar durch ein Anschlusselement des Aufnahmeteilgehäuses und ein Anschlusselement des Führungs-Sitzrings gebildet ist und diese beiden Anschlusselemente axial miteinander fluchten. Das Gehäuse-Anschlusselement kommt kuppelseitig vor dem Sitzring-Anschlusselement in Berührungskontakt mit diesem zu liegen. Dadurch ist, wie an sich bekannt, der Sitzring in der Kuppel-Anschlussposition in dem Aufnahmeteilgehäuse gefangen und festgelegt. Zweckmäßig sind die Gehäuse-Anschlusselemente durch Anschluss- oder Trennrollen und die Sitzring-Anschlusselemente durch Anschlussnocken oder -vorsprünge gebildet.

Vorzugsweise wird wenigstens eine dem Drehversatz zugeordnete Steuerelement-Anfangsposition durch ein geschlossenes inneres Steuerkurvenende einer zugehörigen Kulissen-Steuerkurve der Führungskulisse bestimmt, wobei das innere Steuerkurvenende von dem ersten Gehäuseende des Aufnahmeteilgehäuses abgewandt ist. Eine Ausführungsform besteht darin, dass wenigstens eine genannte Steuerelement-Anfangsposition und wenigstens ein genanntes Anschlusselement in einer zugehörigen gemeinsamen, eine Flucht bildenden Flucht-Axialebene liegen. Vorteilhaft sind an dem Ventiluß des Ventilkörpers im Umfangsabstand von 180° nur zwei Steuerelemente angeordnet, wobei die zugehörigen Steuerelement-Anfangspositionen in der Flucht-Axialebene liegen. Eine bevorzugte Gestaltung besteht darin, dass die beiden Steuerelemente in einem dem Innendurchmesser der Steuerhülse entsprechenden Radialabstand angeordnet sind. Vorteilhaft befindet sich auch der Ventilstegteil in einer Spielpassung in der Steuerhülse und dem Führungs-Sitzring.

Gemäß einer Gestaltung des Trockenkupplungs-Aufnahmeteils weist das Führungs-Radiallager korrespondierende Lagerelemente auf, die zwischen dem Führungs-Sitzring und dem Ventilkörper relative Drehung sperren und relative axiale Gleitbewegbarkeit zulassen, wobei wenigstens ein Teil der genannten Lagerelemente des Führungs-Radiallagers und wenigstens eine genannte Steuerelement-Anfangsposition in einer gemeinsamen, eine Flucht bildenden Flucht-Axialebene liegen.

Hinsichtlich einer weiteren Montageverbesserung ist es vorteilhaft, dass der Ventilkörper der genannten Ventil-Baueinheit einstückig ausgebildet ist. Eine besondere Gestaltung der mit dem erfindungsgemäßen Drehversatz positionierten Ventil-Baueinheit besteht darin, dass zur Montage und Demontage der Ventil-Baueinheit zwischen den Lagerelementen des Führungs-Radiallagers eine Schlüsselverbindung eingerichtet ist, wobei an wenigstens einem ersten Lagerelement wenigstens eine Montageausnehmung ausgebildet ist, in die ein korrespondierendes zweites Lagerelement durch Drehversatz zwischen dem Führungs-Sitzring und dem Aufnahmeteil-Ventilkörper hinein- und umgekehrt herausbewegbar ist, und wobei das zweite Lagerelement auf dem Weg über eine in der Montageausnehmung eingenommene Montageposition axial in eine einen Lagersitz des Führungs-Radiallagers bildende Überlappungsposition mit dem zugehörigen ersten Lagerelement setzbar und umgekehrt aus dem Lagersitz axial herausführbar ist.

Eine Gestaltung besteht darin, dass wenigstens ein zweites Steckelementpaar der Steck-Formschlussverbindung wenigstens ein die drehfeste Verbindung herstellendes Sekantenprofil aufweist. Eine andere vorteilhafte Gestaltung besteht darin, dass wenigstens ein zweites Steckelementpaar der Steck-Formschlussverbindung ein die drehfeste Verbindung herstellendes Profil mit gerundeter Kontur, und zwar vorteilhaft ein ovalförmiges Profil aufweist. Eine bevorzugte Gestaltung besteht weiter darin, dass im Bereich von jedem Ende der Steuerhülse wenigstens ein Steckelementpaar der Steck-Formschlussverbindung ausgebildet ist.

Gemäß einer Gestaltung weist wenigstens ein erstes Steckelementpaar einen an der Innenwand des Aufnahmeteilgehäuses vorspringenden Gehäusesteckrand sowie zugehörig wenigstens einen kragenartigen Hülsensteckrand auf, der in wenigstens einem Endbereich der Steuerhülse ausgebildet ist. Allgemein besteht eine Gestaltung darin, dass wenigstens ein erstes Steckelementpaar Radialränder aufweist, die einen planaren Axialanschlag bilden. Vorteilhaft sind die Axialanschläge an beiden Enden der Steuerhülse ausgebildet, wobei sie Axialbewegung in Richtung des kuppelseitigen Gehäuseendes des Aufnahmeteilgehäuses sperren. Man erhält große Drucksicherheit.

Eine bevorzugte Bauform in Verbindung mit der erfindungsgemäßen Steck-Formschlussverbindung besteht darin, dass die Steuerhülse einen Hülsen-Außendurchmesser aufweist, der einem Innendurchmesser des Aufnahmeteilgehäuses entspricht, wobei zwischen dem Aufnahmeteilgehäuse und der Steuerhülse ein Umfangsspalt ausgebildet ist.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und-möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als strukturell selbständiges Detailbeispiel für andere nicht oder nicht vollständig beschriebene, unter die Erfindung fallende Ausführungen und Gestaltungen zu verstehen. Im Folgenden wird insbesondere mit der Angabe "allgemein" ein solches Merkmal bezeichnet und verstanden, das isoliert von anderen Merkmalen eines oder mehrerer Ausführungsbeispiele zu dem erfindungsgemäßen Erfolg der allgemeinen Lehre der Erfindung beiträgt.

Es zeigen
- Fig. 1A, 1B: im Längsschnitt eine mit einem erfindungsgemäßen Trockenkupplungs-Aufnahmeteil ausgestattete erfindungsgemäße Trockenkupplung mit geschlossenen und geöffneten Ventilen,
- Fig. 2A, 2B: im Längsschnitt das mit einer erfindungsgemäßen SteckFormschlussverbindung eingerichtete Aufnahmeteil der Trockenkupplung gemäß Fig. 1A, 1B mit geschlossenem und geöffnetem Ventil,
- Fig. 3: in axonometrischer Explosionsdarstellung Teile der Trockenkupplung gemäß Fig. 1A und 1B,
- Fig. 4: in axonometrischer Darstellung eine Steuerhülse des Aufnahmeteils gemäß Fig. 2A, 2B mit Elementen einer erfindungsgemäßen Steck-Formschlussverbindung,
- Fig. 5A, 5B: im Längsschnitt sowie in Rückansicht das Aufnahmeteilgehäuse des Aufnahmeteils gemäß Fig. 2A, 2B mit Elementen einer erfindungsgemäßen Steck-Formschlussverbindung,
- Fig. 6A, 6B: in axonometrischer Ansicht und in einem weiteren Längsschnitt das Aufnahmeteilgehäuse gemäß Fig. 5A, 5B.
- Fig. 7A, 7B: Schnittansichten einer Steuerhülse einer erfindungsgemäßen Steck-Formschlussverbindung,
- Fig. 8A, 8B: in Längsansicht und Stirnansicht, teilweise geschnitten,
- und 9A, 9B: eine Ventil-Baueinheit des Aufnahmeteils gemäß Fig. 2A, 2B mit Ventilkörper in fertiggestelltem Zustand (Fig. 8A, 8B) sowie in einer Phase der Montage.

In der Zeichnung wird ein erfindungsgemäßes Trockenkupplungs-Aufnahmeteil 6 sowohl in der Einbauposition und -anordnung in einer Trockenkupplung 100 als auch davon getrennt dargestellt. Eine Ventileinrichtung 1 des Aufnahmeteils 6 ist mit einem Aufnahmeteil-Ventilkörper 3 ausgestattet. Die Ventileinrichtung 1 bildet im Ausführungsbeispiel ein eigenständiges Modulteil des Aufnahmeteils 6, nämlich eine Ventil-Baueinheit, die gleichfalls mit dem Bezugszeichen 1 bezeichnet wird.

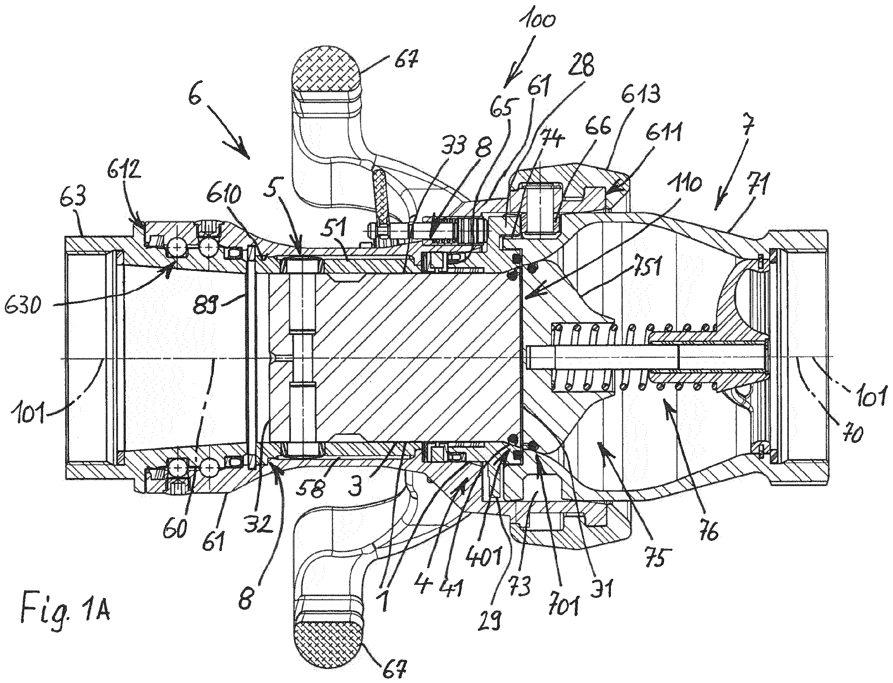

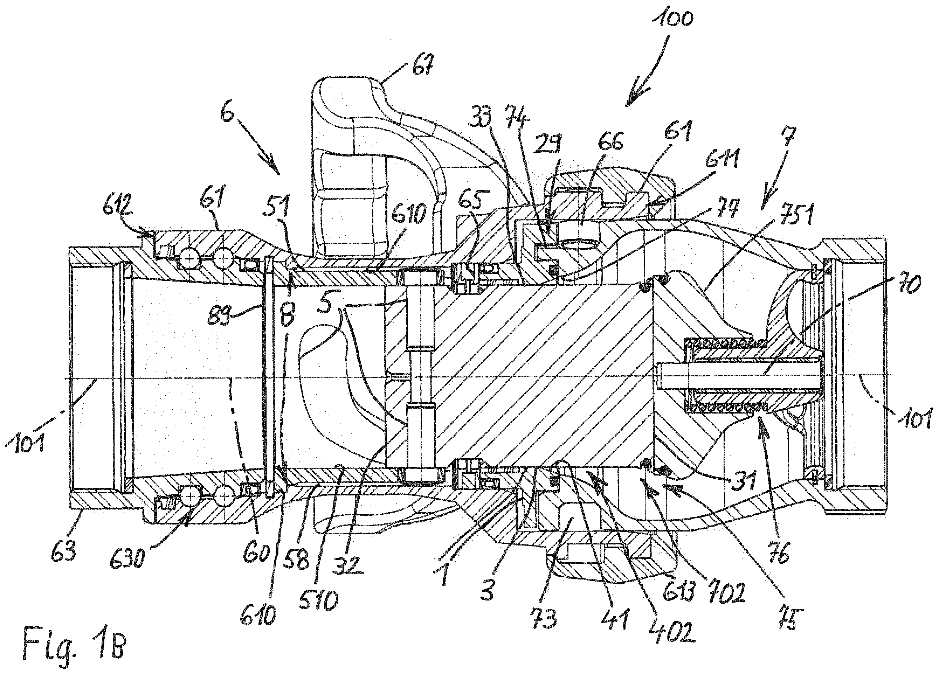

Die in Fig. 1A und 1B in gekuppeltem Zustand dargestellte Trockenkupplung 100 weist das Aufnahmeteil 6 (Mutterteil) und ein Steckteil 7 (Vaterteil) auf, die Kupplungshälften bilden. Das Aufnahmeteil 6 und das Steckteil 7 sind im Bereich einer Kupplungs-Trennstelle 110 aneinander gekuppelt. Eine Aufnahmeteilachse 60 und eine Steckteilachse 70 fallen in einer Kupplungsachse 101 zusammen. Im Kupplungszustand liegen an der Trennstelle 110 der Aufnahmeteil-Ventilkörper 3, der Bestandteil eines Aufnahmeteil-Ventils 4 ist, und ein Steckteil-Ventilkörper 751 eines Steckteil-Ventils 75 aneinander, wobei sie sich in einem in der Kupplungsachse 101 verlagerbaren Schiebeverbund befinden. Der Steckteil-Ventilkörper 751 ist in einem Steckteil-Gehäuse 71 gegen Federkraft einer Druckkrafteinrichtung 76 axial schiebebewegbar gelagert. Der Ventilkörper 3 ist innerhalb eines rohrförmigen Aufnahmeteilgehäuses 61 gelagert und in Axialrichtung in definierte Positionen translatorisch bewegbar. Eine Aufnahmeteil-Steuereinrichtung 5 setzt eine Drehbewegung des Aufnahmeteilgehäuses 61 um die Kupplungsachse 101 in die definierte translatorische Bewegung um. Gehäuse-Handgriffe 67 sind an dem Aufnahmeteilgehäuse 61 zur Drehverstellung angebracht.

In Fig. 1A befinden sich die Ventilkörper 3, 751 in Schließpositionen 401, 701 der Ventile 4 und 75. Fluid-Durchgang wird infolgedessen gesperrt. Der Ventilkörper 3 weist einen Ventilkopf 31 auf, der bei geschlossenem Aufnahmeteil-Ventil 4 in einen Aufnahmeteil-Ventilsitz 41 einfasst. An der Trennstelle 110 fasst der Steckteil-Ventilkörper 751 entsprechend in einen Steckteil-Ventilsitz 77 ein. Im Schließzustand der Ventile 4, 75 gemäß Fig. 1A können die Kupplungshälften durch Lösen von Anschlusselementen 66, 73, die sie verbinden, voneinander getrennt werden.

Ebenfalls ausgehend von dem Kupplungszustand gemäß Fig. 1A können die Ventile 4, 75 zum Durchleiten von Fluid durch die Trockenkupplung 100 geöffnet werden. Infolge einer definierten Drehverstellung einer Steuerhülse 51 der Aufnahmeteil-Steuereinrichtung 5, die drehfest mit dem Aufnahmeteilgehäuse 61 verbunden ist, wird der Ventilkörper 3 axial verlagert, so dass der Ventilkopf 31 den Ventilsitz 41 in einer Aufnahmeteil-Ventilöffnungsposition 402 verlässt und den Steckteil-Ventilkörper 751 gegen die Federkraft der Druckkrafteinrichtung 76 in eine Steckteil-Ventilöffnungsposition 702 axial verschiebt. Mittels der Steuereinrichtung 5 wird die Lage des Ventil-Schiebeverbunds zum Öffnen der Ventile 4, 75 definiert und beibehalten. Dieser Zustand ist in Fig. 1B dargestellt. Zum Schließen der Ventile 4, 75 wird der Ventil-Schiebeverbund durch umgekehrte Drehverstellung der Steuerhülse 51 unter der Kraft der Druckkrafteinrichtung 76 wieder in die Position gemäß Fig. 1A zurückgesetzt.

An dem ersten Gehäuseende 611 des Aufnahmeteilgehäuses 61 ist eine Schutzmanschette 613 angebracht. Zwischen den Teilen der Ventile 4, 75 und den anderen Teilen der beiden Kupplungshälften sind jeweils übliche Dichtungselemente angeordnet.

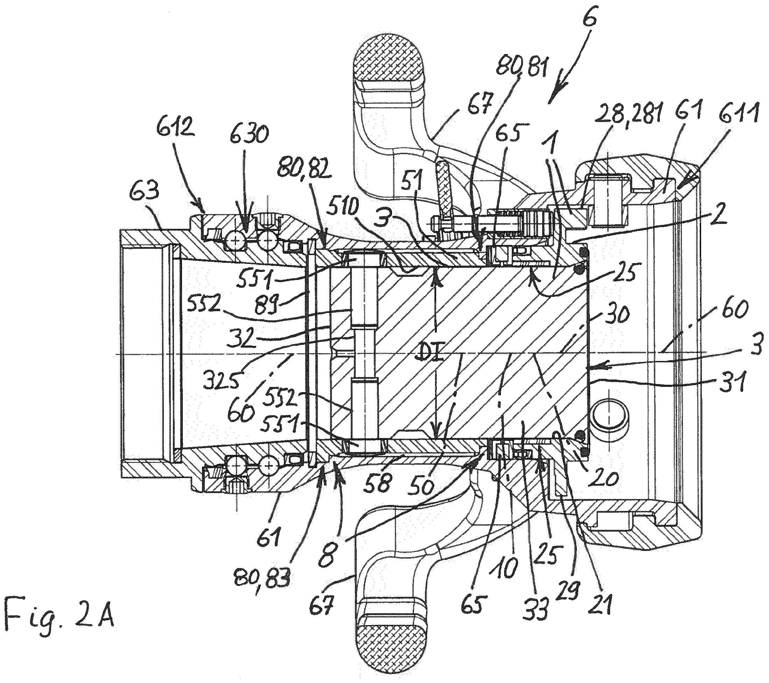

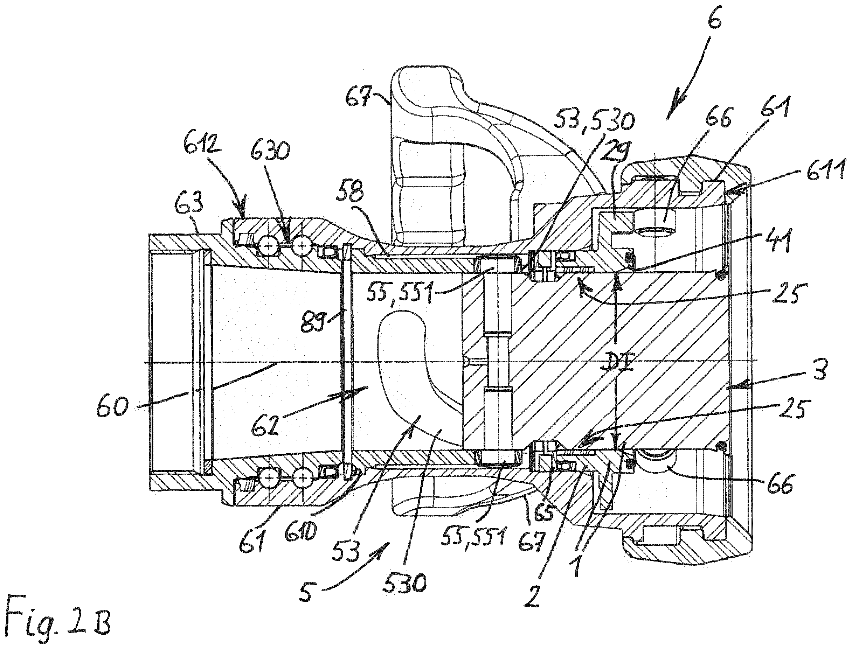

Anhand der Fig. 2A und 2B ist das Trockenkupplungs-Aufnahmeteil 6 detaillierter dargestellt. In Fig. 2A befindet sich das Aufnahmeteil-Ventil 4 in geschlossenem Zustand 401, während in Fig. 2B die Öffnungsposition 402 dargestellt ist. Das Aufnahmeteil 6 setzt sich allgemein modular aus dem Aufnahmeteilgehäuse 61, der Steuerhülse 51 und der Ventil-Baueinheit 1 zusammen.

Stirnseitige Seiten, Enden und Bereiche von sich axial erstreckenden Bauelementen, die der Kuppelseite des Trockenkupplungs-Aufnahmeteils 6 zugewandt sind oder im Bereich der Kuppelseite liegen, werden mit "vorderseitig" oder "Vorderseite" beschrieben, während entgegengesetzt liegende Enden, Seiten oder Bereiche mit "rückseitig" oder "Rückseite" bezeichnet werden.

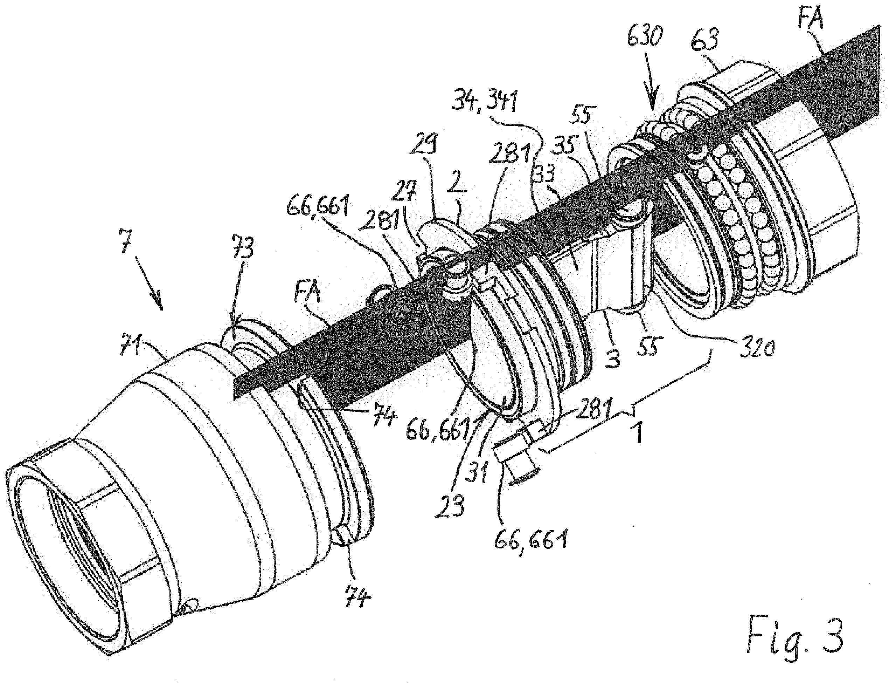

Das Aufnahmeteilgehäuse 61 bildet allgemein ein Druckgehäuse mit Anschluss-/Verbindungselementen zum Kuppeln. Das erste (vordere) Gehäuseende 611 an der Vorderseite des Aufnahmeteilgehäuses 61 ist zum Kuppeln mit dem Trockenkupplungs-Steckteil 7 eingerichtet. Ein zweites (hinteres) Gehäuseende 612 an der Stirnrückseite des Aufnahmeteilgehäuses 61 ist zur Verbindung mit einem nicht dargestellten Leitungs- oder Schlauchelement eingerichtet. Im Ausführungsbeispiel ist das Aufnahmeteilgehäuse 61 mit einem Drehgelenkteil 63 bestückt, das an dem rückseitigen Gehäuseende 612 mittels eines Kugellager-Drehgelenks 630 um die Aufnahmeteilachse 60 drehbar gelagert und zum Anschluss an eine Leitung eingerichtet ist. An dem vorderen Gehäuseende 611 sind innenliegend Anschlusselemente 66, nämlich Anschluss- oder Trennrollen 661 angeordnet, die zum Verbinden mit dem Kupplungs-Steckteil 7 in das Anschlusselement 73, nämlich in eine umlaufende Anschlussnut des Steckteils 7 setzbar sind (Fig. 3). Ein Flanschrand des Steckteils 7 weist Anschlussausnehmungen 74 auf, durch die die Anschlusselemente 66 zum Kuppeln und Entkuppeln hindurchgesetzt und im Kupplungszustand durch die Drehverstellung des Aufnahmeteilgehäuses 61 in der Anschlussnut gefangen werden. Positionierung und Zuordnung gehen insbesondere aus Fig. 3 hervor.

Die Steuerhülse 51 der Steuereinrichtung 5 ist ein separates Bauteil, das keinen Bestandteil eines Druckgehäuses bildet. Die Steuerhülse 51 weist einen Hülsen-Außendurchmesser auf, der einem Innendurchmesser des Aufnahmeteilgehäuses 61 entspricht, derart, dass zwischen dem Aufnahmeteilgehäuse 61 und der Steuerhülse 51 ein Umfangsspalt 58 bleibt, der sicherstellt, dass die Steuerhülse 51 frei oder leichtgängig in das Aufnahmeteilgehäuse 61 setzbar ist. Die Steuerhülse 51 ist konzentrisch in das Aufnahmeteilgehäuse 61 eingesetzt, wobei sie, wie aus Fig. 2A und 2B ersichtlich, an dem rückseitigen Gehäuseende 612 in das Aufnahmeteilgehäuse 61 einführbar ist.

Erfindungsgemäß sind das Aufnahmeteilgehäuse 61 und die Steuerhülse 51 durch eine besondere, die Teile positionierende Lagerung miteinander verbunden. Es ist allgemein eine schraub-, klemm-, stift- und pressfreie Steck- und Formschlussverbindung 8 ausgebildet, die die Steuerhülse 51 an dem Aufnahmeteilgehäuse 61 präzise zentrisch lagert, die mit dem Aufnahmeteilgehäuse 61 drehfeste, mit definiertem Drehversatz eingerichtete Ver-bindung herstellt und die Steuerhülse 51 an ihren beiden Stirnenden in Richtung zum kuppelseitigen Gehäuseende 611 gegen Radialanschläge axial lagert. Die Steuerhülse 51 ist an ihrer Rückseite mittels eines Sicherungselements 89 in Form eines an der Innenwand 610 des Aufnahmeteilgehäuses 61 gelagerten Sicherungsrings festgesetzt, der einfach anzubringen und zu entfernen ist.

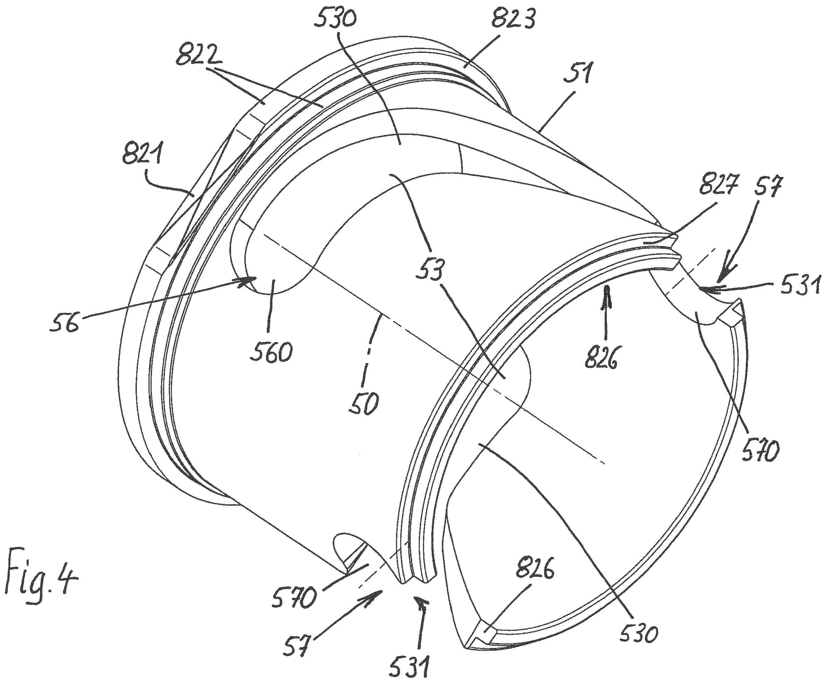

Die Steck-/Formschlussverbindung 8 wird weiter unten insbesondere anhand der Fig. 4, 5A, 5B, 6A, 6B sowie 7A, 7B näher beschrieben.

Das Maß der Drehverstellung der gemeinsam mit dem Aufnahmeteilgehäuse 61 um die Aufnahmeteilachse 60 drehbaren Steuerhülse 51 sowie des damit bewirkten translatorischen Hubs des Ventilkörpers 3 werden durch eine Führungskulisse 53 mit zwei Steuerkurven 530 bestimmt. Wie aus Fig. 4 ersichtlich, sind die beiden Steuerkurven 530 im Umfangsabstand von 180° versetzt angeordnet, wobei sie sich in gleicher Form und Ausrichtung von einem geschlossenen inneren Steuerkurvenende 56 helixförmig zu einem offenen äußeren Steuerkurvenende 57 hin erstrecken. Die offenen äußeren Steuerkurvenenden 57 sind an der dem ersten Gehäuseende 611 zugewandten Vorderseite der Steuerhülse 51 mit axialen Kulissenöffnungen 531 axial offen. Die axiale Länge der Steuerhülse 51 ist derart bemessen, dass an der Vorderseite der Steuerhülse 51 ein Führungs-Sitzring 2 unter Zwischenschaltung eines Sitzring-Federelements 65 anschließt und in dem Aufnahmeteilgehäuse 61 Platz findet. Der Führungs-Sitzring 2 und die Steuerhülse 51 bilden die Innenwandung eines Fluid-Durchgangsraums 62. Allgemein weisen eine Innenwand 510 der Steuerhülse 51 und eine Sitzring-Innenwand 21 einen gemeinsamen Innendurchmesser DI auf.

Die Steuereinrichtung 5 weist weiterhin Steuerelemente 55 auf, zum Beispiel in Form von durch Steuerrollen 551 gebildeten Steuerköpfen, die allgemein an einem rückwärtigen Teil des Ventilkörpers 3 angeordnet sind und in die Steuerkurven 530 einfassen. Zweckmäßig bildet die Führungskulisse 53 eine Führung, die den maximalen Hub des Ventilkörpers 3 infolge einer Drehverstellung der Steuerhülse 51 von mindestens 90°, vorzugsweise von 100°bis etwa 120°bewirkt. Im Ausführungsbeispiel sind Steuerrollen 551 an radiale Enden eines Fußquerelements 320 des Ventilfußes 32 ansetzbar. In das Fußquerelement 320 ist eine radiale Durchgangsbohrung 325 eingebracht, die zum Lagern von Lagerbolzen 552 der Steuerrollen 551 eingerichtet ist. Die Rollen-Lagerbolzen 552 sind lösbar in um 180° gegenüberliegenden Lagerlöcher der Durchgangsbohrung 325 einsetzbar.

Der Ventilkörper 3, die Steuerhülse 51 und der Führungs-Sitzring 2 weisen zugehörige zentrale Körperachsen 30, 50 und 20 auf, die koaxial mit der Aufnahmeteilachse 60 sind. Das Aufnahmeteilgehäuse 61, die Steuerhülse 51, der Führungs-Sitzring 2 und der Ventilkopf 31 sind Teile oder Abschnitte mit kreisförmigen Querschnitten.

Wie insbesondere aus Fig. 3 ersichtlich, sind an dem Sitzringende 23 mit Umfangsabstand von 120° drei stirnseitig vorspringende Anschlusselemente 28 in Form von Nocken ausgebildet, denen die drei Gehäuse-Anschlusselemente 66 zugeordnet sind. Die Anschlusselemente 28 sind an einem vorderseitigen Außenrand 29 des Führungs-Sitzrings 2 ausgebildet. Die Zuordnung und Anordnung ist derart, dass die Sitzring-Anschlusselemente 28 und die Gehäuse-Anschlusselemente 66 zum Kuppeln und Trennen der Kupplungshälften axial miteinander fluchten. In Fig. 3 ist nur eine Flucht-Axialebene FA dargestellt. Man erkennt, dass die Sitzring-Anschlusselemente 28 in die Steckteil-Anschlussausnehmungen 74 einfassen, wenn die Kupplungshälften aneinander gekuppelt sind. Dadurch ist der Führungs-Sitzring 2 zum Kuppeln und während des Kuppelns in eine Sperrposition setzbar, die relative Drehung zwischen dem Führungs-Sitzring 2 und dem Steckteilgehäuse 71 sperrt.

Wie aus Fig. 2A ersichtlich, weist die Steck-Formschlussverbindung 8 zum radialen, axialen und drehfesten Lagern der Steuerhülse 51 Steckelementpaare 80 auf. An der Vorderseite der Steuerhülse 51 ist zwischen dieser und dem Aufnahmeteilgehäuse 61 ein Steckelementpaar 81 ausgebildet. An der Rückseite der Steuerhülse 51 ist zwischen dieser und dem Aufnahmeteilgehäuse 61 ein Steckelementpaar 82 sowie ein Steckelementpaar 83 ausgebildet. Die Steckelemente der Steckelementpaare 81, 82 und 83 sind derart angeordnet und aneinander angepasst, dass sie in der Steck-Formschlussverbindung 8 aneinander sitzen, wobei die Steuerhülse 51 von der rückwärtigen Seite des Aufnahmeteilgehäuses 61 in dieses einsteckbar und in der eingesteckten Position gegen axiale Bewegung in Richtung der Vorderseite des Aufnahmeteilgehäuses 61 sowie gegen Drehung um die Körperachsen 50, 60 in einer definierten Drehversatz-Winkelposition zwischen der Steuerhülse 51 und dem Aufnahmeteilgehäuse 61 gesperrt ist.

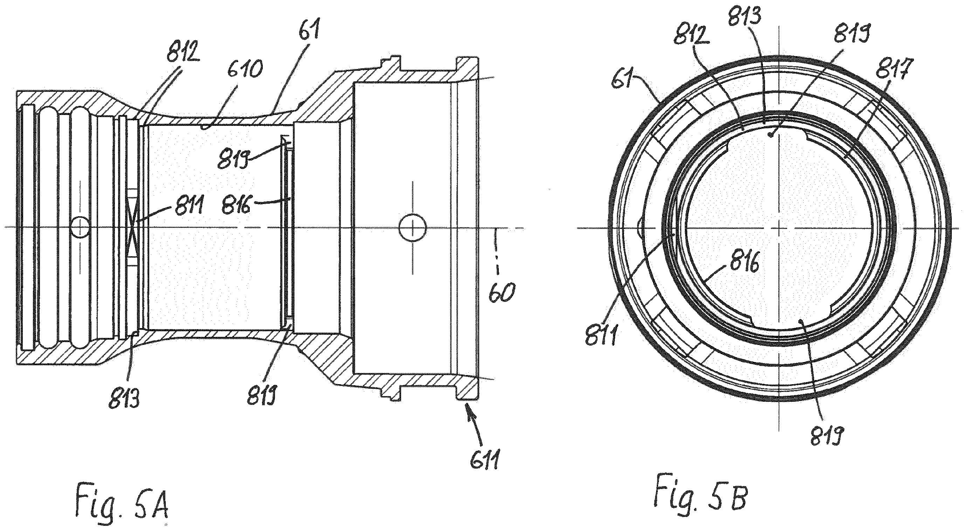

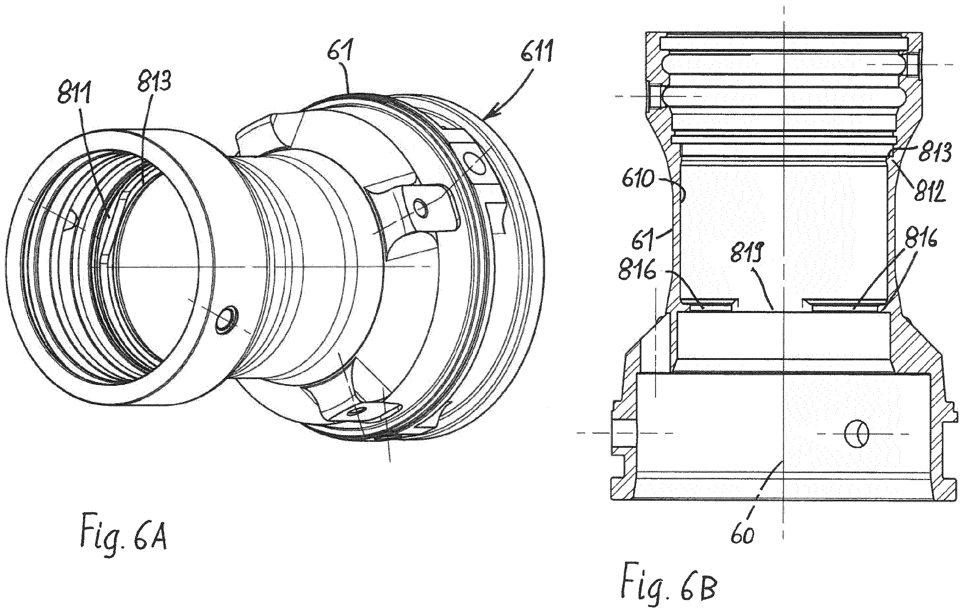

Die Steckelemente der Steckelementpaare 81, 82 und 83 gehen im Detail aus Fig. 4 (Steuerhülse 51) und Fig. 5A, 5B und 6A, 6B (Aufnahmeteilgehäuse 61) hervor.

Das Steckelementpaar 81 weist einen an der Innenwand 610 des Aufnahmeteilgehäuses 61 vorspringenden Gehäusesteckrand 816 sowie einen am vorderen Ende der Steuerhülse 51 ausgebildeten kragenartigen oder stufenförmigen Hülsensteckrand 826 auf. Der Gehäusesteckrand 816 und der stufige Hülsensteckrand 826 fassen zum freien zentrischen Lagern der Steuerhülse 51 an dem Aufnahmeteilgehäuse 61 formschlüssig ineinander. Das Steckelementpaar 82 weist einen innenseitig an dem Aufnahmeteilgehäuse 61 ausgebildeten trapezförmigen Vorsprung 811 sowie eine formgleiche sekantenartige Randausnehmung 821 auf, die an einem kragenartigen oder stufenförmigen Hülsensteckrand 822 am hinteren Ende der Steuerhülse 51 ausgebildet ist. Das Steckelementpaar 83 weist einen an der Innenwand 610 des Aufnahmeteilgehäuses 61 vorspringenden zweiten Gehäusesteckrand 812 und zugehörig den zweiten Hülsensteckrand 822 auf. Der stufige Gehäusesteckrand 812 und der stufige Hülsensteckrand 822 fassen zum freien zentrischen Lagern der Steuerhülse 51 an dem Aufnahmeteilgehäuse 61 formschlüssig ineinander. Der Hülsensteckrand 822 bildet zudem eine Distanzschulter, die den Umfangsspalt 58 zwischen dem Aufnahmeteilgehäuse 61 und der Steuerhülse 51 festlegt.

Die Drehversatz-Winkelposition ist durch Eingriff des Gehäusevorsprungs 811 in die Hülsenrandausnehmung 821 fixiert. Die Axialposition ist dadurch bestimmt, dass ein radialer Kragenrand 823 des Hülsensteckrandes 822 gegen einen rückseitigen Stirnrand 813 des Gehäusesteckrandes 812 anliegt. Mit diesem rückwärtigen axialen planaren Anschlag der Steuerhülse 51 gegen das Aufnahmeteilgehäuse 61 korrespondiert ein vorderseitiger Passsitz, in dem ein axial zurückspringender radialer Stirnrand 827 des Hülsensteckrandes 826 gegen den Gehäusesteckrand 816 planar anschlägt.

Wie aus Fig. 5A, 5B und 6A, 6B ersichtlich, sind in den Gehäusesteckrand 816 Ausnehmungen 819 eingebracht, die so angeordnet sind, dass sie in der Steck-Formschlussverbindung 8 mit den axialen Kulissenöffnungen 531 an den äußeren Steuerkurvenenden 57 fluchten. Man erreicht, dass die Ventil-Baueinheit 1 mit angesetzten Steuerelementen 55 von der Vorderseite des Aufnahmeteilgehäuses 61 in dieses sowie in die Steuerhülse 51 zum Fertigen des Trockenkupplungs-Aufnahmeteils 6 axial einschiebbar ist.

Anstelle der beschriebenen Elemente der Steck-Formschlussverbindung 8 können zum Lagern, Fixieren der Drehversatz-Winkelposition sowie zur axialen Positionierung Elemente jeder Lager- und Formschlussverbindung eingerichtet werden, die die Steuerhülse 51 und das Aufnahmeteilgehäuse 61 koaxial in loser, freier Verbindung lagert und in definierten Positionen drehfest und axial nur mittels Formschluss aneinander festsetzt. Es kommt allgemein darauf an, dass die Lagerung und Verbindung durch eine frei lösbare, insoweit lose Passung gebildet ist, die frei von Kraft- oder Reibschluss ist. Zum Beispiel kann die drehfeste Verbindung mehrere beschriebene Sekantenverbindungen oder Formflächen eines Polygonzuges aufweisen. Allgemein kann die Steck-Formschlussverbindung durch konkave/konvexe Konturpassungen gebildet sein, die die drehfeste Verbindung mit dem definierten Drehversatz herstellen.

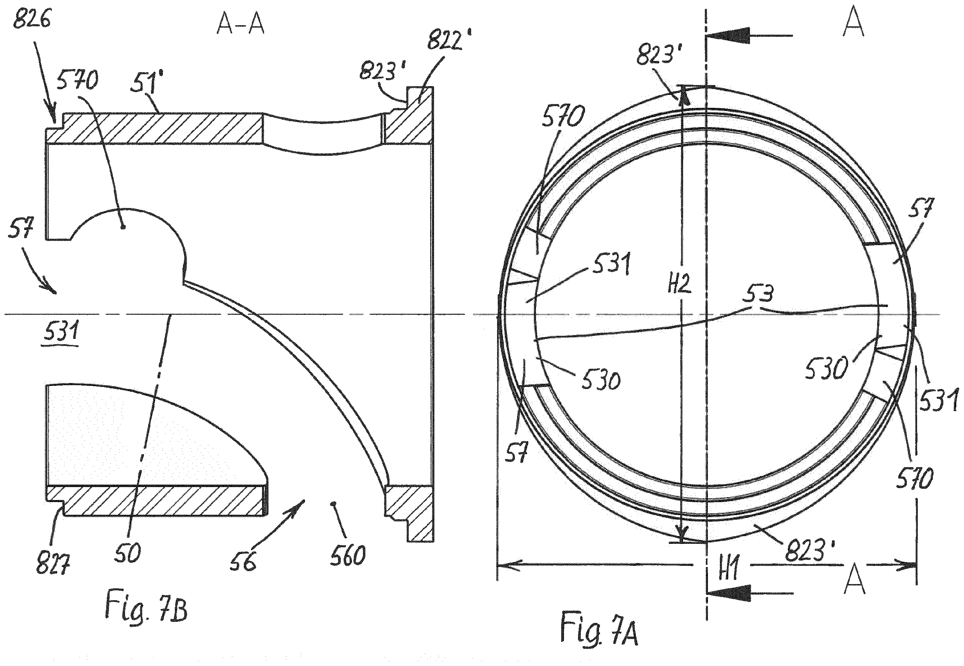

Ein Beispiel für eine Steck-Formschlussverbindung, die eine kurvenförmige Konturpassung aufweist, geht aus Fig. 7A, 7B hervor. Fig. 7B zeigt die Vorderansicht einer Steuerhülse 51', die in Fig. 7B im Schnitt A-A zu sehen ist. Anstelle der gemäß Fig. 4 für die Trapez/Sekanten-Passung (Steckelementpaar 82) eingerichteten Steuerhülse ist die Steuerhülse 51' gemäß Fig. 7A, 7B mit im Umfangsabstand von 180° angeordneten Steckelementen vorgesehen. Die Steckelemente sind durch stufige Hülsensteckränder 822' mit gegenüberliegenden konvexen Form-Vorsprüngen gebildet. Die Außenkontur des Hülsensteckrandes 822' ist ovalähnlich mit einem kleinen Durchmesser H1, der dem Innendurchmesser eines rohrförmigen Aufnahmeteilgehäuses 61 entspricht, sowie mit einem die Ausformung bestimmenden größeren Durchmesser H2. Die Hülsensteckränder 822' weisen entsprechend geformte radiale Kragenränder 823' auf. Das nicht dargestellte zugehörige Aufnahmeteilgehäuse 61 weist eine korrespondierende konkave Kurvenkontur des Steckmundes des Gehäusesteckrandes 812 auf. Im Übrigen ist die Steuerhülse 51' gemäß Fig. 7A, 7B sowie die Steuerhülse 51 gemäß Fig. 4 gestaltet und eingerichtet.

Es ist weiterhin erfindungswesentlich, dass mit der definierten Drehversatz-Winkelposition der Steck-Formschlussverbindung 8 der Ventil-Schließposition 401 zugeordnete Kuppel-Anschlusspositionen der Anschlusselemente 28, 66 sowie Anfangspositionen der Steuerelemente 55 in der Führungskulisse 53 eingerichtet und bestimmt sind. Mit dem erfindungsgemäß einfachen definierten Drehversatz zwischen der Steuerhülse 51 und dem Aufnahmeteilgehäuse 61 werden sämtliche Bauteile des Trockenkupplungs-Aufnahmeteils 6 zum Fertigen desselben sowie zum Kuppeln mit einem zugehörigen Steckteil 7 der Trockenkupplung 100 zugeordnet und präzise in die erforderlichen Positionen gesetzt.

Im Ausführungsbeispiel bilden die Anschlusselemente 28, 66 in ihren Kuppel-Anschlusspositionen drei Anschlusspaare, in denen die Anschlusselemente 28, 66 axial miteinander fluchten (Fig. 3). Wie aus Fig. 1A, 2A ersichtlich, wird der Führungs-Sitzring 2 im Aufnahmeteilgehäuse 61 zwischen den Anschlusselementen 66 und dem Sitzring-Federelement 65 gefangen gehalten. Der definierte Drehversatz zwischen dem Aufnahmeteilgehäuse 61 und der Steuerhülse 51 ist so gewählt, dass die Steuerelemente 55 zugehörig zu den Kuppel-Anschlusspositionen zum Kuppeln und Entkuppeln der beiden Kupplungshälften der Trockenkupplung 100 in Steuerelement-Anfangspositionen an den inneren Steuerkurvenenden 56 einfassen. Die in Fig. 3 zu sehenden Steuerelemente 55 befinden sich in dieser Position. Die Steuerelemente 55 fassen in die Steuerkurven-Raststellen 560 der in Fig. 3 nicht dargestellten Steuerhülse 51 ein.

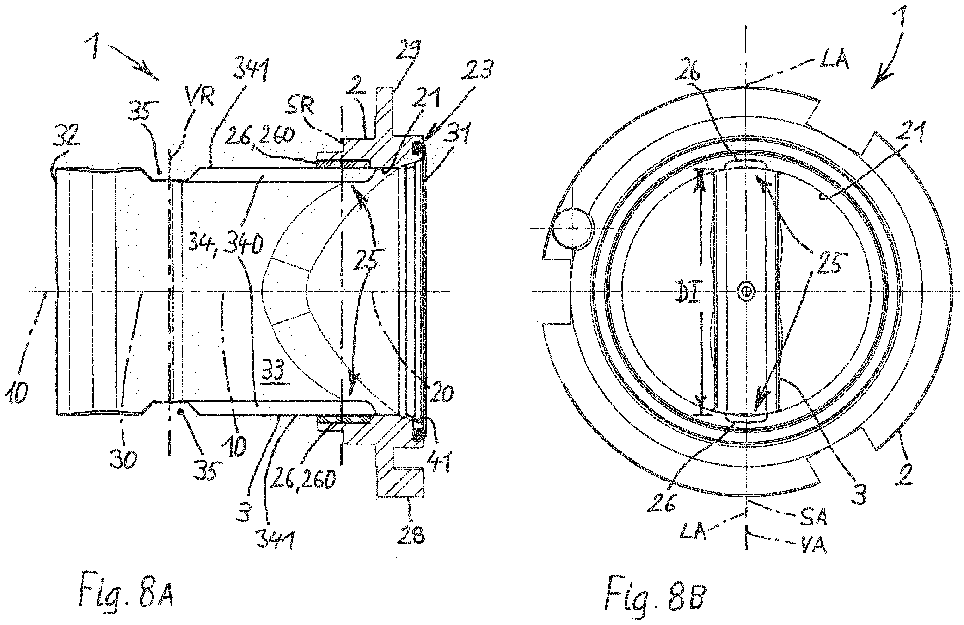

Die Ventil-Baueinheit 1, wie sie in Fig. 8A, 8B dargestellt ist, ist ein vorgefertigtes Bauteil. Die Ventil-Baueinheit 1 umfasst den Führungs-Sitzring 2 mit der Sitzring-Innenwand 21 und den Ventilkörper 3. Der Ventilkörper 3 umfasst den Ventilkopf 31, einen Ventilfuß 32 sowie einen Ventilstegteil 33, der den Ventilkopf 31 und den Ventilfuß 32 miteinander verbindet und axial beabstandet. Ein Führungs-Radiallager 25 lagert den Ventilstegteil 33 an der Sitzring-Innenwand 21 derart, dass der Ventilkörper 3 entlang einer zentralen Körperachse 10 der Ventil-Baueinheit 1 zur translatorischen Verstellbewegung axial gleitbewegbar ist. An einem ersten, vorderen Sitzringende 23 ist der Ventilsitz 41 ausgebildet. Erste Lagerelemente 26, die an der Sitzring-Innenwand 21 hervorstehen, und zweite Lagerelemente 34, die an dem Ventilstegteil 33 ausgebildet sind, fassen korrespondierend axial und radial ineinander und bilden dadurch in Überlappungsverbindung einen Lagersitz. Die korrespondierenden Lagerelemente 26, 34 sind durch Lagerelementpaare gebildet, die jeweils ein nasenförmiges Lagerelement 260 mit U-förmiger Ausnehmung und ein schienenförmiges Lagerelement 340 aufweisen.

Die Ventil-Baueinheit 1 wird zur Montage mit an den Ventilfuß 32 angesetzten Steuerelementen 55 in das Aufnahmeteilgehäuse 61 eingesetzt, wobei die Steuer-elemente 55 in Axialrichtung in die axialen Kulissenöffnungen 531 einführbar sind. Bei diesem Vorgang muss der Außenrand 29 des Führungs-Sitzrings 2 die Gehäuse-Anschlusselemente 66 passieren. Dies gelingt im Ausführungsbeispiel dadurch, dass in den Außenrand 29 drei Randausnehmungen 27 eingebracht sind, die den Sitzring-Anschlusselementen 28 zugeordnet sind. Die Randausnehmungen 27 befinden sich von den Anschlusselementen 28 in einem Umfangsabstand, der dem Umfangsabstand der axialen Kulissenöffnungen 531 von den Steuerkurven-Raststellen 570 entspricht.

Die beiden Lagerelement-Paare sind im Umfangsabstand von 180° angeordnet, wobei an der Sitzring-Innenwand 21 die nasenförmigen Lagerelemente 260 gegenüberliegend hervorstehen und die schienenförmigen Lagerelemente 340 Lagerränder 341 sind, die an dem Ventilstegteil 33 ausgebildet sind. In einer zu dem Lagersitz gehörenden Lagersitz-Lagerebene LA fallen eine axiale Sitzring-Lagerebene SA, in der die nasenförmigen Lagerelemente 260 liegen, und eine axiale Ventilkörper-Lagerebene VA, in der die schienenförmigen Lagerelemente 340 liegen, zusammen.

Das Fußquerelement 320 ist wie das Ventilstegteil 33 in der Lagersitz-Lagerebene LA der schienenförmigen Lagerelemente 340 angeordnet und ausgerichtet und weist einen Fuß-Querdurchmesser DF auf, der größer als ein Lagerinnendurchmesser DL ist, der durch den radialen, diagonalen freien Abstand der ersten Lagerelemente 260 bestimmt ist. Im Ausführungsbeispiel ist auch ein radialer Querdurchmesser DS des Ventilstegteils 33 gleich dem Fuß-Querdurchmesser DF. Der Querdurchmesser DS ist das Abstandsmaß zwischen den Lagerrändern 341. Es entspricht dem korrespondierenden Abstandsmaß zwischen den Stegen von U-förmigen Gleitaufnahmen 261, die die ersten Lagerelemente 26 insbesondere in Form von Gleitschuhen 262 bilden können.

Wie insbesondere anhand der Fig. 3, insbesondere in Verbindung mit Fig. 8A, 8B deutlich wird, liegen die Lagerelemente 26, 34 bzw. die Lagersitz-Lagerebene LA des Führungs-Radiallagers 25 in der einen Flucht-Axialebene FA, in der im Ausführungsbeispiel auch ein Paar der Anschlusselemente 28, 66 liegt. Man erkennt, dass allgemein auch die Ausrichtung des Ventilkörpers 3 in Korrespondenz mit dem ihn lagernden Führungs-Radiallager 25 durch den definierten Drehversatz eingerichtet wird. Im Ausführungsbeispiel befinden sich die Steuerelemente 55 in den axialen Kulissenöffnungen 531, wenn sich der Ventilkörper 3 nahezu in der maximalen Ventil-Öffnungsposition 402 befindet, zu der die Steuerkurven-Raststelle 570 gehört.

Allgemein ist es wesentlich, dass der Drehversatz zwischen der Steuerhülse 51 und dem Aufnahmeteilgehäuse 61 mit dem zugehörigen Umfangsabstand bzw. Winkel eingerichtete Positionen eines jeden Steuerelements 55 und von Anschlusselementen 28, 66 und insbesondere auch von Lagerelementen eines Führungs-Radiallagers der Ventileinrichtung 1 definiert. Diese Positionen sind im Ausführungsbeispiel durch die Positionen der inneren Steuerkurvenenden 56 und der äußeren Steuerkurvenenden 57 der Steuerkurven 530 bestimmt. Dem Drehversatz können auch andere zu definierende Positionen, z.B. Durchgangspositionen der Steuerelemente 55 entlang der Steuerkurven 530 und/oder Positionen der Anschlusselemente zugeordnet werden.

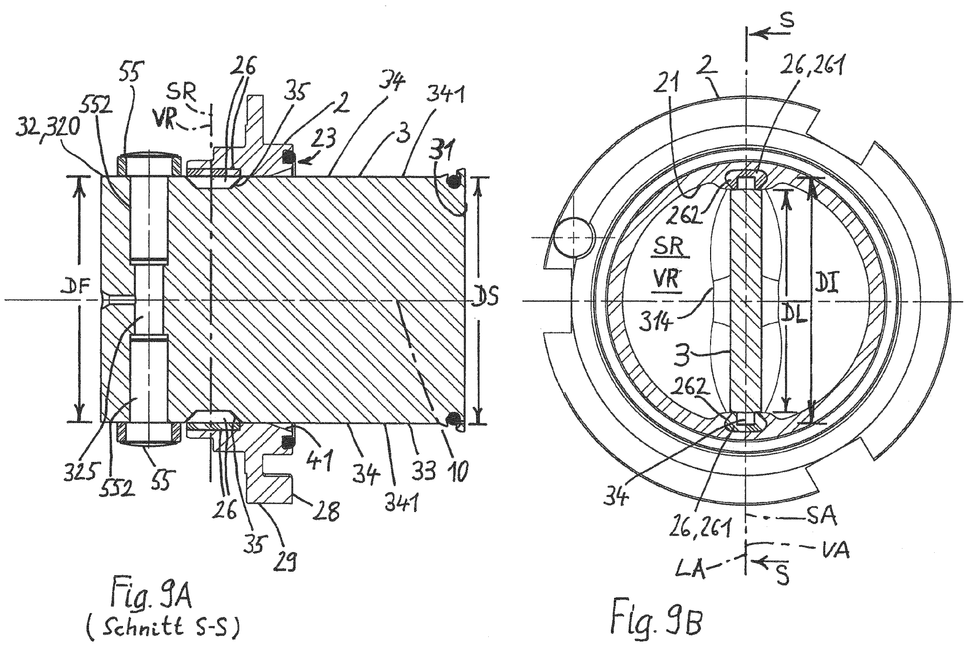

Wie aus Fig. 8A, 8B und 9A, 9B hervorgeht, ist eine Schlüsselverbindung des Führungs-Radiallagers 25 zwischen den nasenförmigen Lagerelementen 260 und den schienenförmigen Lagerelementen 340 eingerichtet. Montageausnehmungen 35 sind zur Montage und Demontage der Ventil-Baueinheit 1 durch relative Drehverstellung und Axialverstellung zwischen dem Führungs-Sitzring 2 und dem Ventilkörper 3 mit den zugehörigen nasenförmigen, allgemein formgleichen Lagerelementen 260 in deckungsgleiche freie Montagepositionen setzbar. In diesen Positionen fallen eine Radialebene SR, in der die ersten Lagerelemente 26 liegen, und eine Radialebene VR, in der sich die Montageausnehmungen 35 befinden, zusammen. Die Dimensionierung des Ventilstegteils 33 ist so, dass der axiale Hub, der zum Öffnen des Aufnahmeteil-Ventils 4 vorgesehen wird, kleiner ist als der maximale Abstand zwischen den Radialebenen SR, VR (Fig. 8A). Die Montageausnehmungen 35 sind zwischen dem Ventilfuß 32 und dem Ventilstegteil 33 am rückseitigen Ende der Lagerelemente 340 angeordnet.

Auf dem Weg über die Montagepositionen sind die nasenförmigen Lagerelemente 260 mit den U-förmigen Ausnehmungen und die schienenförmigen Lagerelemente 340 axial in die Überlappungsverbindung setzbar bzw. aus dieser herausführbar. Jedes nasenförmige Lagerelement 260 ist durch relativen Drehversatz zwischen dem Führungs-Sitzring 2 und dem Ventilkörper 3 in die Montageausnehmung 35 hineinbewegbar bzw. aus ihr herausbewegbar. Außerhalb der Deckungsposition liegen die nasenförmigen Lagerelemente 260 und die schienenförmigen Lagerelemente 340 in zwei unterschiedlichen Axialebenen. Das heißt, dass die axiale Sitzring-Lagerebene SA, in der die nasenförmigen Lagerelemente 260 liegen, mit der axialen Ventilkörper-Lagerebene VA, in der die schienenförmigen Lagerelemente 340 liegen, nicht mehr zusammenfallen. Wie in den Figuren dargestellt, kann die Ventil-Baueinheit 1 vorteilhaft aus dem Führungs-Sitzring 2 und einem einstückig ausgebildeten Ventilkörper 3 zusammengesetzt werden.

## Patentansprüche

1. Trockenkupplungs-Aufnahmeteil (6) für eine Fluid-Trockenkupplung (100), umfassend
(i) ein sich entlang einer zentralen Aufnahmeteilachse (60) axial erstreckendes rohrförmiges Aufnahmeteilgehäuse (61) mit einem ersten kuppelseitigen Gehäuseende (611) zum Kuppeln mit einem Trockenkupplungs-Steckteil (7) der Trockenkupplung (100) sowie mit einem zweiten leitungsseitigen Gehäuseende (612) zur Verbindung mit einem Leitungselement,
(ii) eine in dem Aufnahmeteilgehäuse (61) angeordnete Ventileinrichtung (1), gebildet durch einen Führungs-Sitzring (2) mit einer Sitzring-Innenwand (21) sowie durch einen den Führungs-Sitzring (2) mit einem Teil durchfassenden, an dem Führungs-Sitzring (2) mittels eines Führungs-Radiallagers (25) radial gelagerten und axial gleitbewegbaren Ventilkörper (3), wobei das Aufnahmeteilgehäuse (61) und der Führungs-Sitzring (2) zum Kuppeln mit dem Trockenkupplungs-Steckteil (7) in Eingriff bringbare Anschlusselemente (28, 66) aufweisen, die zum Herstellen einer drehfesten Verbindung zwischen dem Führungs-Sitzring (2) und dem Trockenkupplungs-Steckteil (7) sowie zum Herstellen einer Drehverbindung zwischen dem Aufnahmeteilgehäuse (61) und dem Trockenkupplungs-Steckteil (7) eingerichtet sind,
- wobei der Ventilkörper (3) einen Ventilkopf (31), einen außerhalb des Führungs-Sitzrings (2) liegenden Ventilfuß (32) sowie einen mittels des Führungs-Radiallagers (25) an der Sitzring-Innenwand (21) gelagerten Ventilstegteil (33) aufweist, der den Ventilkopf (31) und den Ventilfuß (32) miteinander verbindet und axial beabstandet,
- wobei der Führungs-Sitzring (2) an einem ersten Sitzringende (23) einen Ventilsitz (41) aufweist, der zusammen mit dem Ventilkopf (31) ein Aufnahmeteil-Ventil (4) bildet, wobei der Ventilkopf (31) in Ventil-Schließposition (401) dichtend in den Ventilsitz (41) einfasst und in Ventil-Öffnungsposition (402) an dem ersten Sitzringende (23) aus dem Führungs-Sitzring (2) hervortritt,
(iii) eine Aufnahmeteil-Steuereinrichtung (5), mittels der der Ventilkörper (3) in die Ventil-Öffnungsposition (402) sowie umgekehrt in die Ventil-Schließposition (401) bewegbar ist, umfassend eine um die Aufnahmeteilachse (60) drehbare Steuerhülse (51) mit einer Führungskulisse (53) sowie Steuerelemente (55), die an dem Ventilfuß (32) angeordnet sind und die in die Führungskulisse (53) einfassen, wobei zentrale Körperachsen (30, 50, 20) des Ventilkörpers (3), der Steuerhülse (51) und des Führungs-Sitzrings (2) koaxial mit der Aufnahmeteilachse (60) sind, der Führungs-Sitzring (2) und die Steuerhülse (51) einen den Ventilkörper (3) mit Fluidströmung beaufschlagenden Fluid-Durchgangsraum (62) bilden und der axial bewegbar gelagerte Ventilkörper (3) durch richtungsabhängige Drehung der Steuerhülse (51) und entsprechende Axialverlagerung in die Ventil-Schließposition (401) bzw. die Ventil-Öffnungsposition (402) setzbar ist, und das Aufnahmeteilgehäuse (61) und die Steuerhülse (51) separate, drehfest miteinander verbundene Bauteile sind,
**dadurch gekennzeichnet, dass** zwischen dem Aufnahmeteilgehäuse (61) und der Steuerhülse (51) eine lösbare, lose Steck-Formschlussverbindung (8) ausgebildet ist, die die drehfeste Verbindung ausbildet und die Steuerhülse (51) an dem Aufnahmeteilgehäuse (61) gegen axiale Bewegung zum kuppelseitigen Gehäuseende (611) hin festlegt, wobei die Steck-Formschlussverbindung (8) wenigstens ein erstes Steckelementepaar (80, 82) aufweist, das das Aufnahmeteilgehäuse (61) und die Steuerhülse (51) formschlüssig in einer durch den Formschluss fixierten Versatzwinkelposition miteinander verbindet, in der zum Kuppeln und Entkuppeln sowohl eine zu der Ventil-Schließposition (401) gehörende Steuerelement-Anfangsposition von jedem Steuerelement (55) in der Führungskulisse (53) als auch zugehörige Kuppel-Anschluss-positionen der genannten Anschlusselemente (28, 66) bestimmt sind, und wobei die Steck-Formschlussverbindung (8) wenigstens ein zweites Steckelementpaar (80, 81, 83) aufweist, das die festgelegte Axialposition bestimmt.

2. Aufnahmeteil nach Anspruch 1, **dadurch gekennzeichnet, dass** die Steck-Formschlussverbindung (8) derart eingerichtet ist, dass die Steuerhülse (51) an dem zweiten Gehäuseende (612) des Aufnahmeteilgehäuses (61) in dieses einführbar ist.

3. Aufnahmeteil nach Anspruch 1 oder 2, **dadurch gekennzeichnet, dass** die Steck-Formschlussverbindung (8) der Steuerhülse (51) mittels eines Sicherungselements (89) gesichert ist.

4. Aufnahmeteil nach einem der Ansprüche 1 bis 3, **dadurch gekennzeichnet, dass** die Führungskulisse (53) an ihrer dem ersten Gehäuseende (611) des Aufnahmeteilgehäuses (61) zugewandten Seite zum Einsetzen und Entnehmen der an dem Ventilfuß (32) angeordneten Steuerelemente (55) axial offen ist

5. Aufnahmeteil nach Anspruch 4, **dadurch gekennzeichnet, dass** die Anschlusselemente (28, 66) in ihren Kuppel-Anschlusspositionen Anschlusspaare bilden, wobei jedes Anschlusspaar durch ein Anschlusselement (66) des Aufnahmeteilgehäuses (61) und ein Anschlusselement (28) des Führungs-Sitzrings (2) gebildet ist und diese beiden Anschlusselemente (28, 66) axial miteinander fluchten.

6. Aufnahmeteil nach einem der Ansprüche 1 bis 5, **dadurch gekennzeichnet, dass** genannte Anschlusselemente (66), die an dem Aufnahmeteilgehäuse (61) angeordnet sind, durch Anschlussrollen (661) gebildet sind und dass genannte Anschlusselemente (28), die an dem Führungs-Sitzring (2) angeordnet sind, durch Anschlussnocken (281) gebildet sind.

7. Aufnahmeteil nach einem der Ansprüche 1 bis 6, **dadurch gekennzeichnet, dass** wenigstens eine genannte Steuerelement-Anfangsposition durch ein geschlossenes inneres Steuerkurvenende (56) einer zugehörigen Kulissen-Steuerkurve (530) der Führungskulisse (53) bestimmt ist, wobei das innere Steuerkurvenende (56) von dem ersten Gehäuseende (611) des Aufnahmeteilgehäuses (61) abgewandt ist.

8. Aufnahmeteil nach einem der Ansprüche 1 bis 7, **dadurch gekennzeichnet, dass** wenigstens eine genannte Steuerelement-Anfangsposition und wenigstens ein genanntes Anschlusselement (28, 66) in einer zugehörigen gemeinsamen, eine Flucht bildenden Flucht-Axialebene (FA) liegen.

9. Aufnahmeteil nach einem der Ansprüche 1 bis 8, **dadurch gekennzeichnet, dass** an dem Ventilfuß (32) des Ventilkörpers (3) im Umfangsabstand von 180° zwei Steuerelemente (55) angeordnet sind, wobei die zugehörigen Steuerelement-Anfangspositionen in einer Flucht-Axialebene (FA) liegen.

10. Aufnahmeteil nach Anspruch 9, **dadurch gekennzeichnet, dass** die beiden Steuerelemente (55) in einem dem Innendurchmesser der Steuerhülse (55) entsprechenden Radialabstand angeordnet sind.

11. Aufnahmeteil nach einem der Ansprüche 1 bis 10, **dadurch gekennzeichnet, dass** das Führungs-Radiallager (25) korrespondierende Lagerelemente (26, 34) aufweist, die zwischen dem Führungs-Sitzring (2) und dem Ventilkörper (3) relative Drehung sperren und relative axiale Gleitbewegbarkeit zulassen, wobei wenigstens ein Teil der genannten Lagerelemente (26, 34) des Führungs-Radiallagers (25) und wenigstens eine genannte Steuerelement-Anfangsposition in einer gemeinsamen, eine Flucht bildenden Flucht-Axialebene (FA) liegen.

12. Aufnahmeteil nach Anspruch 11, **dadurch gekennzeichnet, dass** der Führungs-Sitzring (2) und der Ventilkörper (3) eine vorgefertigte Ventil-Baueinheit (1) bilden, die an dem ersten Gehäuseende (611) in das Aufnahmeteilgehäuse (61) einführbar ist.

13. Aufnahmeteil nach Anspruch 12, **dadurch gekennzeichnet, dass** der Ventilkörper (3) mit dem Ventilkopf (31), dem Ventilfuß (32) und dem Ventilstegteil (33) einstückig ausgebildet ist.

14. Aufnahmeteil nach einem der Ansprüche 11 bis 13, **dadurch gekennzeichnet, dass** zur Montage und Demontage der Ventil-Baueinheit (1) zwischen den Lagerelementen (26, 34) des Führungs-Radiallagers (25) eine Schlüsselverbindung eingerichtet ist, wobei an wenigstens einem ersten Lagerelement (34) wenigstens eine Montageausnehmung (35) ausgebildet ist, in die ein korrespondierendes zweites Lagerelement (26) durch Drehversatz zwischen dem Führungs-Sitzring (2) und dem Aufnahmeteil-Ventilkörper (3) hinein- und umgekehrt herausbewegbar ist, und wobei das zweite Lagerelement (26) über eine in der Montageausnehmung (35) eingenommene Montageposition axial in eine einen Lagersitz des Führungs-Radiallagers (25) bildende Überlappungsposition mit dem zugehörigen ersten Lagerelement (34) setzbar und umgekehrt aus dem Lagersitz axial herausführbar ist.

15. Aufnahmeteil nach einem der Ansprüche 1 bis 14, **dadurch gekennzeichnet, dass** wenigstens ein genanntes Steckelementpaar (82) der Steck-Formschlussverbindung (8) wenigstens ein die drehfeste Verbindung herstellendes Sekantenprofil aufweist.

16. Aufnahmeteil nach einem der Ansprüche 1 bis 15, **dadurch gekennzeichnet, dass** wenigstens ein genanntes Steckelementpaar (80) der Steck-Formschlussverbindung (8) ein die drehfeste Verbindung herstellendes Profil mit gerundeter Kontur aufweist.

17. Aufnahmeteil nach einem der Ansprüche 1 bis 16, **dadurch gekennzeichnet, dass** in jedem Endbereich der Steuerhülse (51) wenigstens ein Steckelementpaar (81, 83) der Steckelementpaare (81, 82, 83) der Steck-Formschlussverbindung (8) ausgebildet ist.

18. Aufnahmeteil nach einem der Ansprüche 1 bis 17, **dadurch gekennzeichnet, dass** wenigstens ein erstes Steckelementpaar (81) einen an der Innenwand (610) des Aufnahmeteilgehäuses (61) vorspringenden Gehäusesteckrand (816) sowie zugehörig wenigstens einen kragenartigen Hülsensteckrand (826) aufweist, der an wenigstens einem Ende der Steuerhülse (51) ausgebildet ist.

19. Aufnahmeteil nach einem der Ansprüche 1 bis 18, **dadurch gekennzeichnet, dass** wenigstens ein erstes Steckelementpaar (80, 81, 83) Radialränder (816, 827; 813, 823) aufweist, die einen Axialanschlag bilden.

20. Aufnahmeteil nach Anspruch 19, **dadurch gekennzeichnet, dass** die Axialanschläge an beiden Enden der Steuerhülse (51) ausgebildet sind und Axialbewegung der Steuerhülse (51) in Richtung des kuppelseitigen Gehäuseendes (611) des Aufnahmeteilgehäuses (61) sperren.

21. Aufnahmeteil nach einem der Ansprüche 1 bis 20, **dadurch gekennzeichnet, dass** die Steuerhülse (51) einen Hülsen-Außendurchmesser aufweist, der einem Innendurchmesser des Aufnahmeteilgehäuses (61) entspricht, wobei zwischen dem Aufnahmeteilgehäuse (61) und der Steuerhülse (51) ein Umfangsspalt (58) ausgebildet ist.

22. Fluid-Trockenkupplung (100), gebildet durch ein Trockenkupplungs-Aufnahmeteil (6) nach einem der Ansprüche 1 bis 21 und ein an das Trockenkupplungs-Aufnahmeteil (6) angeschlossenes Trockenkupplungs-Steckteil (7) mit einem einen Steckteil-Ventilkörper (751) aufweisenden Steckteil-Ventil (75), wobei der Ventilkörper (3) des Trockenkupplungs-Aufnahmeteils (6) und der Steckteil-Ventilkörper (751) des Trockenkupplungs-Steckteils (7) in einem axial verlagerbaren Schiebeverbund aneinander sitzen, der gegen Rückstellkraft aus zugehörigen Ventil-Schließpositionen (401, 701) in Ventil-Öffnungspositionen (402, 702) setzbar ist.

## Claims

1. Dry-coupling receiving part (6) for a dry-coupling for fluid (100), comprising
(i) a tubular receiving-part housing (61) extending axially along a central receiving-part axis (60) having a first coupling-side housing end (611) for coupling with a dry-coupling plug-in part (7) of the dry coupling (100) and having a second pipe-side housing end (612) for connecting to a pipe element,
(ii) a valve device (1) arranged in the receiving-part housing (61), formed by a guide seat ring (2) with a seat ring inner wall (21) and by a guide seat ring (2) with a part passing through an axially slidable valve body (3) radially mounted on the guide seat ring (2) by means of a guiding radial bearing (25), wherein the receiving-part housing (61) and the guide seat ring (2) have connecting elements (28, 66) for coupling which can be brought into engagement with the dry-coupling plug-in part (7), said connecting elements being configured to establish a non-rotatable connection between the guide seat ring (2) and the dry-coupling plug-in part (7) as well as to establish a rotary connection between the receiving-part housing (61) and the dry-coupling plug-in part (7),
- wherein the valve body (3) has a valve head (31), a valve base (32) situated outside the guide seat ring (2) and a valve web part (33) mounted by means of the guiding radial bearing (25) on the seat ring inner wall (21), said valve web part joining the valve head (31) and the valve base (32) together and spacing them apart axially,
- wherein the guide seat ring (2) has a valve seat (41) on a first seat ring end (23), which together with the valve head (31) forms a receiving-part valve (4), wherein the valve head (31) engages sealingly in the valve seat (41) in the closing position (401) of the valve and protrudes from the guide seat ring (2) on the first seat ring end (23) in the opening position (402) of the valve,
(iii) a receiving-part control device (5), by means of which the valve body (3) is movable into the opening position (402) of the valve and conversely into the closing position (401) of the valve, comprising a control sleeve (51) rotatable about the receiving-part axis (60) with a guiding link (53) and control elements (55) which are arranged on the valve base (32) and which engage in the guiding link (53), wherein central body axes (30, 50, 20) of the valve body (3), the control sleeve (51) and the guide seat ring (2) are coaxial with the receiving-part axis (60), the guide seat ring (2) and the control sleeve (51) form a fluid passage space (62) which charges the valve body (3) with fluid flow, and the valve body (3) mounted so as to be axially movable can be placed, due to directionally dependent rotation of the control sleeve (51) and corresponding axial displacement, into the closing position (401) of the valve or the opening position (402) of the valve, and the receiving-part housing (61) and the control sleeve (51) are separate components joined non-rotatably to each other,
**characterised in that** between the receiving-part housing (61) and the control sleeve (51), a releasable, loose plug-in form-fitting connection (8) is created, which forms the non-rotatable connection and fixes the control sleeve (51) on the receiving-part housing (61) against axial movement in relation to the coupling-side housing end (611), wherein the plug-in form-fitting connection (8) has at least one first plug-in element pair (80, 82), which joins the receiving-part housing (61) and the control sleeve (51) to each other in a form-fitting manner in an offset angle position fixed by the form fit, in which, for coupling and uncoupling, both a control element starting position associated with the closing position of the valve (401) and also associated control coupling connection positions of the said connecting elements (28, 66) are determined by each control element (55) in the guiding link (53), and wherein the plug-in form-fitting connection (8) has at least one second plug-in element pair (80, 81, 83) which determines the defined axial position.

2. Receiving part according to claim 1, **characterised in that** the plug-in form-fitting connection (8) is configured in such a way that the control sleeve (51) on the second housing end (612) of the receiving-part housing (61) is insertable therein.

3. Receiving part according to claim 1 or 2, **characterised in that** the plug-in form-fitting connection (8) of the control sleeve (51) is secured by means of a locking element (89).

4. Receiving part according to any one of claims 1 to 3, **characterised in that** the guiding link (53) on its side directed towards the first housing end (611) of the receiving-part housing (61) is open axially for inserting and removing the control elements (55) arranged on the valve base (32).

5. Receiving part according to claim 4, **characterised in that** the connecting elements (28, 66) form connecting pairs in their coupling connection positions, wherein each connecting pair is formed by a connecting element (66) of the receiving-part housing (61) and a connecting element (28) of the guide seat ring (2) and these two connecting elements (28, 66) are axially aligned with each other.

6. Receiving part according to any one of claims 1 to 5, **characterised in that** said connecting elements (66), which are arranged on the receiving-part housing (61), are formed by connection rollers (661) and that said connecting elements (28), which are arranged on the guide seat ring (2), are formed by connection cams (281).

7. Receiving part according to any one of claims 1 to 6, **characterised in that** at least one said control element starting position is determined by a closed inner end (56) of the control curve of an associated link control curve (530) of the guiding link (53), wherein the inner end (56) of the control curve is directed away from the first housing end (611) of the receiving-part housing (61).

8. Receiving part according to any one of claims 1 to 7, **characterised in that** at least one said control element starting position and at least one said connecting element (28, 66) lie in an associated common aligning axial plane (FA) forming an alignment.

9. Receiving part according to any one of claims 1 to 8, **characterised in that** two control elements (55) are arranged on the valve base (32) of the valve body (3) at a circumferential distance of 180°, wherein the associated control element starting positions lie in an aligning axial plane (FA).

10. Receiving part according to claim 9, **characterised in that** the two control elements (55) are arranged in a radial spacing corresponding to the inner diameter of the control sleeve (55).

11. Receiving part according to any one of claims 1 to 10, **characterised in that** the guiding radial bearing (25) has corresponding bearing elements (26, 34), which block the relative rotation between the guide seat ring (2) and the valve body (3) and permit relative axial sliding movement, wherein at least a part of the said bearing elements (26, 34) of the guiding radial bearing (25) and at least one said control element starting position lie in a common aligning axial plane (FA) forming an alignment.

12. Receiving part according to claim 11, **characterised in that** the guide seat ring (2) and the valve body (3) form a prefabricated valve assembly (1), which at the first housing end (611) is insertable in the receiving-part housing (61).

13. Receiving part according to claim 12, **characterised in that** the valve body (3) is formed integrally with the valve head (31), the valve base (32) and the valve web part (33).

14. Receiving part according to any one of claims 11 to 13, **characterised in that** for assembling and dismantling the valve assembly (1), a key connection is configured between the bearing elements (26, 34) of the guiding radial bearing (25), wherein at least one mounting recess (35) is formed on at least one first bearing element (34), in which a corresponding second bearing element (26) can be moved in and conversely out by means of a rotatable offset between the guide seat ring (2) and the receiving-part valve body (3), and wherein the second bearing element (26) can be placed axially, by way of a mounting position assumed in the mounting recess (35), into an overlapping position with the associated first bearing element (34) which forms a bearing seat of the guiding radial bearing (25) and conversely can be guided axially out of the bearing seat.

15. Receiving part according to any one of claims 1 to 14, **characterised in that** at least one said plug-in element pair (82) of the plug-in form-fitting connection (8) has at least one secant profile creating a non-rotatable connection.

16. Receiving part according to any one of claims 1 to 15, **characterised in that** at least one said plug-in element pair (80) of the plug-in form-fitting connection (8) has a profile with a rounded contour creating a non-rotatable connection.

17. Receiving part according to any one of claims 1 to 16, **characterised in that** at least one plug-in element pair (81, 83) of the plug-in element pairs (81, 82, 83) of the plug-in form-fitting connection (8) is formed in each end portion of the control sleeve (51).

18. Receiving part according to any one of claims 1 to 17, **characterised in that** at least one first plug-in element pair (81) has a housing plug-in edge (816) protruding on the inner wall (610) of the receiving-part housing (61) and associated with it at least one collar-like sleeve plug-in edge (826), which is formed on at least one end of the control sleeve (51).

19. Receiving part according to any one of claims 1 to 18, **characterised in that** at least one first plug-in element pair (80, 81, 83) has radial edges (816, 827; 813, 823) which form an axial stop.

20. Receiving part according to claim 19, **characterised in that** the axial stops are formed on both ends of the control sleeve (51) and block axial movement of the control sleeve (51) in the direction of the coupling-side housing end (611) of the receiving-part housing (61).

21. Receiving part according to any one of claims 1 to 20, **characterised in that** the control sleeve (51) has a sleeve outer diameter which corresponds to an inner diameter of the receiving-part housing (61), wherein a circumferential gap (58) is formed between the receiving-part housing (61) and the control sleeve (51).

22. Dry coupling (100) for fluid, formed by a dry-coupling receiving part (6) according to any one of claims 1 to 21 and a dry-coupling plug-in part (7) connected to the dry-coupling receiving part (6) with a plug-in-part valve (75) having a plug-in-part valve body (751), wherein the valve body (3) of the dry-coupling receiving part (6) and the plug-in-part valve body (751) of the dry-coupling plug-in part (7) sit against each other in an axially displaceable sliding combination, which can be placed out of associated closing positions (401, 701) of the valve into opening positions (402, 702) of the valve against the restoring force.

## Revendications

1. Élément de logement d'un embrayage à sec (6) pour un embrayage à sec pour fluides (100), comprenant
(i) un boîtier d'élément de logement (61) tubulaire s'étendant axialement le long d'un axe central d'élément de logement (60), doté d'une première extrémité de boîtier (611) côté embrayage destinée à être couplée avec une fiche d'embrayage à sec (7) de l'embrayage à sec (100) ainsi que d'une deuxième extrémité de boîtier (612) côté conduite destinée à être reliée à une pièce de conduite,
(ii) un dispositif de soupape (1) agencé dans le boîtier d'élément de logement (61), formé d'une bague de siège de guidage (2) dotée d'une paroi intérieure de bague de siège (21), ainsi que d'un corps de soupape (3) mobile de façon coulissante dans le sens axial, monté radialement sur la bague de siège de guidage (2) au moyen d'un palier radial de guidage (25) et traversant d'une partie la bague de siège de guidage (2), le boîtier d'élément de logement (61) et la bague de siège de guidage (2) présentant des pièces de raccordement (28, 66) destinées au couplage et qui peuvent venir en prise avec la fiche d'embrayage à sec (7), lesquelles sont conçues pour réaliser une liaison rigide en rotation entre la bague de siège de guidage (2) et la fiche d'embrayage à sec (7) ainsi que pour réaliser une liaison pivotante entre le boîtier d'élément de logement (61) et la fiche d'embrayage à sec (7),
- le corps de soupape (3) présentant une tête de soupape (31), un pied de soupape (32) situé à l'extérieur de la bague de siège de guidage (2) ainsi qu'une tige de soupape (33) montée sur la paroi intérieure de la bague de siège (21) au moyen du palier radial de guidage (25), laquelle tige de soupape (33) relie la tête de soupape (31) au pied de soupape (32) et les éloigne l'une de l'autre dans le sens axial,
- la bague de siège de guidage (2) présentant à une première extrémité de bague de siège (23) un siège de soupape (41) qui forme avec la tête de soupape (31) une soupape d'élément de logement (4), la tête de soupape (31) pénétrant de manière hermétique dans le siège de soupape (41) en position de fermeture de soupape (401) et saillant au-dehors de la bague de siège de guidage (2) à la première extrémité de bague de siège (23) en position d'ouverture de la soupape (402),
(iii) un dispositif de servocommande d'élément de logement (5), au moyen duquel le corps de soupape (3) peut être déplacé dans la position d'ouverture de soupape (402) ainsi que, à l'inverse, dans la position de fermeture de soupape (401), comprenant une douille de commande (51) rotative autour de l'axe de l'élément de logement (60) et dotée d'une coulisse de guidage (53), ainsi que des éléments de commande (55) qui sont agencés sur le pied de soupape (32) et qui pénètrent dans la coulisse de guidage (53), des axes centraux de corps (30, 50, 20) du corps de soupape (3), de la douille de commande (51) et de la bague de siège de guidage (2) étant coaxiaux avec l'axe de l'élément de logement (60), la bague de siège de guidage (2) et la douille de commande (51) formant un espace de passage de fluide (62) appliquant un courant de fluide au corps de soupape (3) et le corps de soupape (3), monté mobile dans le sens axial, pouvant être mis dans la position de fermeture de soupape (401) ou dans la position d'ouverture de soupape (402) en tournant la douille de commande (51) en fonction du sens et par déplacement axial correspondant, et le boîtier d'élément de logement (61) et la douille de commande (51) étant des composants séparés, solidaires l'un de l'autre de manière rigide en rotation,
**caractérisé en ce qu'**est formée entre le boîtier d'élément de logement (61) et la douille de commande (51) une liaison enfichable par complémentarité de forme (8), lâche et détachable, qui constitue la liaison rigide en rotation et maintient la douille de commande (51) au boîtier d'élément de logement (61) contre tout déplacement axial vers l'extrémité du boîtier (611) côté embrayage, la liaison enfichable par complémentarité de forme (8) présentant au moins une première paire d'éléments enfichables (80, 82) qui relie l'un à l'autre le boîtier d'élément de logement (61) et la douille de commande (51) par complémentarité de forme dans une position de décalage angulaire fixée par la complémentarité de forme, dans laquelle sont déterminées, pour coupler et découpler, aussi bien une position initiale pour élément de commande de chaque élément de commande (55) dans la coulisse de guidage (53), correspondant à la position de fermeture de la soupape (401), que des positions correspondantes de raccordement par couplage desdites pièces de raccordement (28, 66), et la liaison enfichable par complémentarité de forme (8) présentant au moins une deuxième paire d'éléments enfichables (80, 81, 83) qui détermine la position axiale fixée.

2. Élément de logement selon la revendication 1, **caractérisé en ce que** la liaison enfichable par complémentarité de forme (8) est conçue de telle sorte qu'au niveau de la deuxième extrémité de boîtier (612) du boîtier de l'élément de logement (61), la douille de commande (51) peut être introduite dans ladite extrémité.

3. Élément de logement selon l'une des revendications 1 ou 2, **caractérisé en ce que** la liaison enfichable par complémentarité de forme (8) de la douille de commande (51) est sécurisée au moyen d'un élément de fixation (89).

4. Élément de logement selon l'une quelconque des revendications 1 à 3, **caractérisé en ce que** la coulisse de guidage (53) est, sur son côté orienté vers la première extrémité de boîtier (611) du boîtier de l'élément de logement (61), ouverte dans le sens axial pour installer et retirer les éléments de commande (55) agencés sur le pied de soupape (32).

5. Élément de logement selon la revendication 4, **caractérisé en ce que** les pièces de raccordement (28, 66) forment des couples de raccordement dans leur position de raccordement par couplage, chaque couple de raccordement étant formé par une pièce de raccordement (66) du boîtier d'élément de logement (61) et une pièce de raccordement (28) de la bague de siège de guidage (2) et ces deux pièces de raccordement (28, 66) étant alignées l'une avec l'autre dans le sens axial.

6. Élément de logement selon l'une quelconque des revendications 1 à 5, **caractérisé en ce que** desdites pièces de raccordement (66), qui sont agencées sur le boîtier de l'élément de logement (61), sont formées par des bobines de raccordement (661) et que desdites pièces de raccordement (28), qui sont agencées sur la bague de siège de guidage (2), sont formées par des cames de raccordement (281).

7. Élément de logement selon l'une quelconque des revendications 1 à 6, **caractérisé en ce qu'**au moins une dite position initiale de l'élément de commande est déterminée par une extrémité de came (56) intérieure fermée d'une came pour coulisse (530) correspondante de la coulisse de guidage (53), l'extrémité de came (56) intérieure n'étant pas tournée vers la première extrémité (611) du boîtier de l'élément de logement (61).

8. Élément de logement selon l'une quelconque des revendications 1 à 7, **caractérisé en ce qu'**au moins une dite position initiale de l'élément de commande et au moins une dite pièce de raccordement (28, 66) sont dans un plan axial d'alignement (FA) commun, correspondant et formant un alignement.

9. Élément de logement selon l'une quelconque des revendications 1 à 8, **caractérisé en ce que** deux éléments de commande (55) sont agencés sur le pied de soupape (32) du corps de soupape (3) espacés l'un de l'autre à distance périphérique de 180°, les positions initiales correspondantes d'élément de commande étant dans un plan axial d'alignement (FA).

10. Élément de logement selon la revendication 9, **caractérisé en ce que** les deux éléments de commande (55) sont agencés à distance radiale correspondant au diamètre interne de la douille de commande (55).

11. Élément de logement selon l'une quelconque des revendications 1 à 10, **caractérisé en ce que** le palier radial de guidage (25) présente des éléments de palier correspondants (26, 34) qui bloquent toute rotation relative entre la bague de siège de guidage (2) et le corps de soupape (3) et autorisent tout déplacement coulissant axial relatif, au moins une partie desdits éléments de palier (26, 34) du palier radial de guidage (25) et au moins une dite position initiale d'élément de commande étant dans un plan axial d'alignement (FA) commun formant un alignement.

12. Élément de logement selon la revendication 11, **caractérisé en ce que** la bague de siège de guidage (2) et le corps de soupape (3) forment un module de soupape (1) préfabriqué qui peut être introduit dans le boîtier d'élément de logement (61) à la première extrémité de boîtier (611).

13. Élément de logement selon la revendication 12, **caractérisé en ce que** le corps de soupape (3) est constitué d'un seul tenant avec la tête de soupape (31), le pied de soupape (32) et la tige de soupape (33).

14. Élément de logement selon l'une quelconque des revendications 11 à 13, **caractérisé en ce qu'**est installée une liaison clé entre les éléments de palier (26, 34) du palier radial de guidage (25) pour le montage et le démontage du module de soupape (1), au moins un évidement de montage (35) étant constitué à au moins un premier élément de palier (34), dans lequel un deuxième élément de palier (26) correspondant peut être introduit et, à l'inverse, ressorti par déport de rotation entre la bague de siège de guidage (2) et le corps de soupape de l'élément de logement (3), et le deuxième élément de palier (26) pouvant être mis, par une position de montage prise dans l'évidement de montage (35), dans le sens axial dans une position de chevauchement formant un siège de palier du palier radial de guidage (25) avec le premier élément de palier (34) correspondant, et pouvant, à l'inverse, être retiré du siège de palier dans le sens axial.

15. Élément de logement selon l'une quelconque des revendications 1 à 14, **caractérisé en ce qu'**au moins une dite paire d'éléments enfichables (82) de la liaison enfichable par complémentarité de forme (8) présente au moins un profil de sécante réalisant la liaison rigide en rotation.

16. Élément de logement selon l'une quelconque des revendications 1 à 15, **caractérisé en ce qu'**au moins une dite paire d'éléments enfichables (80) de la liaison enfichable par complémentarité de forme (8) présente un profil qui réalise la liaison rigide en rotation, à contour arrondi.

17. Élément de logement selon l'une quelconque des revendications 1 à 16, **caractérisé en ce qu'**à chaque zone d'extrémité de la douille de commande (51) est constituée au moins une paire d'éléments enfichables (81, 83) des paires d'éléments enfichables (81, 82, 83) de la liaison enfichable par complémentarité de forme (8).

18. Élément de logement selon l'une quelconque des revendications 1 à 17, **caractérisé en ce qu'**au moins une première paire d'éléments enfichables (81) présente un bord enfichable de boîtier (816) en saillie sur la paroi intérieure (610) du boîtier de l'élément de logement (61) ainsi que de manière correspondante au moins un bord enfichable de douille (826) en forme de collier, lequel est constitué à au moins une extrémité de la douille de commande (51).

19. Élément de logement selon l'une quelconque des revendications 1 à 18, **caractérisé en ce qu'**au moins une première paire d'éléments enfichables (80, 81, 83) présente des bords radiaux (816, 827 ; 813, 823) qui forment une butée axiale.

20. Élément de logement selon la revendication 19, **caractérisé en ce que** les butées axiales sont constituées aux deux extrémités de la douille de commande (51) et empêchent tout déplacement axial de la douille de commande (51) vers l'extrémité de boîtier (611) du boîtier de l'élément de logement (61) côté embrayage.

21. Élément de logement selon l'une quelconque des revendications 1 à 20, **caractérisé en ce que** la douille de commande (51) présente un diamètre extérieur de douille qui correspond à un diamètre intérieur du boîtier de l'élément de logement (61), une fente circonférentielle (58) étant constituée entre le boîtier de l'élément de logement (61) et la douille de commande (51).

22. Embrayage à sec pour liquides (100) formé par un élément de logement pour embrayage à sec (6) selon l'une quelconque des revendications 1 à 21 et une fiche d'embrayage à sec (7) raccordée à l'élément de logement pour embrayage à sec (6), dotée d'une soupape de fiche (75) présentant un corps de soupape de fiche (751), le corps de soupape (3) de l'élément de logement pour embrayage à sec (6) et le corps de soupape de fiche (751) de la fiche d'embrayage à sec (7) étant l'un à côté de l'autre dans un assemblage de glissement déplaçable dans le sens axial qui peut être mis dans des positions d'ouverture de soupape (402, 702) contre toute force de rappel issue des positions de fermeture de soupape (401, 701) correspondantes.
